(19) **Europäisches Patentamt / European Patent Office / Office européen des brevets**

(11) **EP 3 144 468 B1**

(12) **FASCICULE DE BREVET EUROPEEN**

(45) Date de publication et mention de la délivrance du brevet:
**27.03.2019 Bulletin 2019/13**

(21) Numéro de dépôt: **16187472.2**

(22) Date de dépôt: **06.09.2016**

(51) Int Cl.:
*E21B 43/14* (2006.01)       *G01V 99/00* (2009.01)
*G01N 15/08* (2006.01)       *E21B 41/00* (2006.01)
*E21B 43/26* (2006.01)       *E21B 49/00* (2006.01)

(54) **PROCÉDÉ POUR CARACTERISER LE RÉSEAU DE FRACTURES D'UN GISEMENT FRACTURE ET PROCÉDÉ POUR L'EXPLOITER**

VERFAHREN ZUR CHARAKTERISIERUNG DES BRUCHNETZES EINES BRUCHLAGERS, UND VERFAHREN ZU DESSEN AUSBEUTUNG

METHOD FOR CHARACTERISING THE NETWORK OF FRACTURES OF A FRACTURED DEPOSIT AND METHOD FOR EXPLOITING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.09.2015 FR 1558653**

(43) Date de publication de la demande:
**22.03.2017 Bulletin 2017/12**

(73) Titulaire: **IFP Energies nouvelles**
**92500 Rueil-Malmaison (FR)**

(72) Inventeurs:
• **FOURNO, Andre**
  **92500 RUEIL-MALMAISON (FR)**
• **BOURBIAUX, Bernard**
  **92500 RUEIL MALMAISON (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**FR-A1- 2 967 200       FR-A1- 2 976 099**
**US-A1- 2011 320 177**

• **WARREN J E ET AL: "THE BEHAVIOR OF NATURALLY FRACTURED RESERVOIRS", SPE PAPERS, XX, XX, vol. 3, no. 3, 1 septembre 1963 (1963-09-01), pages 245-255, XP002058945,**

**Description**

La présente invention concerne le domaine de l'industrie pétrolière, et plus particulièrement l'exploration et l'exploitation de gisements d'hydrocarbures ou de sites de stockage géologique de gaz.

En particulier, l'invention concerne un procédé pour construire une représentation d'une formation souterraine traversée par un réseau de fractures quelconque, et l'utilisation de cette représentation pour la simulation des écoulements de fluide dans la formation considérée.

L'exploration et l'exploitation de gisements, notamment pétroliers, nécessitent d'acquérir une connaissance aussi parfaite que possible de la géologie souterraine, et ce, afin de fournir de façon efficace une évaluation des réserves, une modélisation de la production, ou de la gestion de l'exploitation. En effet, la détermination de l'emplacement d'un puits de production ou d'un puits d'injection au sein d'un gisement d'hydrocarbures, la constitution de la boue de forage, les caractéristiques de complétion, le choix d'un procédé de récupération des hydrocarbures (tel que l'injection d'eau par exemple) et des paramètres nécessaires à la mise en oeuvre de ce procédé (tels que la pression d'injection, le débit de production,...) nécessitent de bien connaître le gisement. La connaissance d'un gisement signifie disposer d'une description aussi précise que possible de la structure, des propriétés pétrophysiques, des propriétés des fluides, etc, du gisement étudié.

Pour acquérir cette connaissance, l'industrie pétrolière allie les mesures sur champ (réalisées in situ, lors de campagnes sismiques, de mesures dans des puits, de carottages etc) aux modélisations expérimentales (réalisées au laboratoire) ainsi qu'aux simulations numériques (réalisées au moyen de logiciels).

La formalisation de cette connaissance passe ensuite par l'établissement d'une maquette du sous-sol, connue sous le terme de « modèle géologique », qui permet de rendre compte de ces aspects de façon approchée. Généralement, ce type de maquette est représenté sur un ordinateur, et l'on parle alors de modèle numérique. Un modèle de réservoir comporte une représentation maillée (sous la forme d'une grille régulière, ou sous la forme d'un maillage de façon plus générale), généralement tridimensionnelle, au moins une propriété pétrophysique (porosité, perméabilité, saturation...) étant attribuée à chacune des mailles de la représentation maillée.

Afin de reproduire ou prédire (i.e. "simuler") la production d'hydrocarbures réelle, le spécialiste en ingénierie de réservoir met en oeuvre un logiciel de calcul, appelé « simulateur de réservoir ». Le simulateur de réservoir est un simulateur d'écoulement, qui calcule les écoulements et l'évolution des pressions au sein du réservoir représenté par un « modèle de réservoir ». Si la puissance informatique disponible pour réaliser les simulations d'écoulement le permet, le modèle de réservoir peut se confondre avec le modèle géologique. Dans le cas contraire, le modèle de réservoir peut être obtenu à l'issue d'une technique d'« upscaling » (mise à l'échelle), qui permet de passer du modèle géologique (modèle aux mailles plus fines) au modèle réservoir (modèle aux mailles plus grossières). Cette étape d'upscaling est bien connue du spécialiste en ingénierie de réservoir et peut être réalisée par exemple à l'aide du logiciel CobraFlow (IFP Energies nouvelles, France).

Les résultats de ces calculs permettent alors de prévoir et d'optimiser des schémas d'exploitation (définition du nombre de puits à implanter, de leur position, du mode de récupération assistée etc) du gisement étudié afin d'améliorer les débits et/ou les quantités d'hydrocarbures récupérés. Le calcul du comportement du réservoir suivant un scénario de production donné constitue une simulation de réservoir.

Les documents suivants seront cités au cours de la description :

Bourbiaux, B., Cacas, M. C., Sarda, S. and Sabathier J. C., 1998, "A Rapid and Efficient Methodology to Convert Fractured Reservoir Images into a Dual-Porosity Model", Oil & Gas Science and Technology, Vol. 53, No. 6, Nov.-Déc. 1998, 785-799.

Delorme, M., Atfeh, B., Allken, V. and Bourbiaux, B., 2008, Upscaling Improvement for Heterogeneous Fractured Reservoir Using a Geostatistical Connectivity Index, edited in Geostatistics 2008, VIII International Geostatistics Congress, Santiago, Chile.

Oda, M., 1985, Permeability tensor for discontinuous Rock Masses, Geotechnique Vol 35, Issue 4, 483-495.

Warren, J.E. et Root, P.J., "The Behavior of Naturally Fractured Reservoirs", SPE Journal (septembre 1963), 245-255.

Fourno, A., Grenier, C., Benabderrahmane, A., Delay, F., 2013, A continuum voxel approach to model flow in 3D fault networks: A new way to obtain up-scaled hydraulic conductivity tensors of grid cells, Journal of Hydrology, 493, 68-80.

Les réservoirs fracturés constituent un type extrême de réservoirs géologiques hétérogènes, comportant deux milieux contrastés: un milieu matriciel contenant la plus grande part de l'huile en place et présentant une faible perméabilité, et un milieu fracturé représentant moins de 1 % de l'huile en place et hautement conducteur. Le milieu fracturé lui-même peut être complexe, composé de différentes familles de fractures caractérisées par leur densité, et des distributions portant sur la longueur des fractures de chaque famille, leur orientation dans l'espace et leur ouverture. On appelle « fracture », une discontinuité plane, de très faible épaisseur par rapport à son extension, et qui représente un plan de rupture d'une roche du gisement.

Les spécialistes en charge de l'exploitation de réservoirs fracturés, ont besoin de parfaitement connaître le rôle des fractures. D'une part, la connaissance de la distribution et du comportement de ces fractures permet d'optimiser les schémas de production d'un gisement d'hydrocarbures, c'est-à-dire le nombre de puits à forer, leur localisation, leur géométrie, le type de fluide de récupération injecté etc. D'autre part, la géométrie du réseau de fractures conditionne le déplacement des fluides, tant à l'échelle du réservoir qu'à l'échelle locale, où elle détermine des blocs matriciels élémentaires dans lesquels l'huile est piégée. Connaître la distribution des fractures est également très utile pour l'ingénieur de réservoir qui cherche à calibrer les modèles qu'il construit, de sorte à ce que les modèles construits reproduisent les courbes de production passées, et ce, afin de prédire les productions futures de façon fiable. A ces fins, les spécialistes de géosciences disposent d'images tridimensionnelles des gisements, permettant de localiser un grand nombre de fractures.

Confronté à la complexité des milieux fracturés, les spécialistes utilisent bien souvent une approche de type « double milieu » pour représenter ce type de milieu. Cette approche, décrite par exemple dans (Warren J.E. *et al.,* 1963), consiste à considérer le milieu fracturé comme deux continuums échangeant des fluides entre eux : des blocs matriciels et des fractures. On parle alors de modèle « double milieu » ou « double porosité ». Ainsi, la modélisation en « double milieu » d'un gisement fracturé consiste à discrétiser ce gisement en deux ensembles de mailles (appelés grilles) superposés, constituant la grille "fissure" et la grille "matrice". Chaque volume élémentaire du gisement fracturé est ainsi conceptuellement représenté par deux mailles, l'une "fissure" et l'autre "matrice", couplées entre elles (c'est-à-dire échangeant des fluides). Dans la réalité du champ fracturé, ces deux mailles représentent l'ensemble des blocs matriciels délimités par des fractures présentes en cet endroit du réservoir. En effet, le plus souvent, les mailles ont des dimensions latérales hectométriques (couramment 100 ou 200 m) compte tenu de la taille des champs et des possibilités limitées des logiciels de simulation en termes de capacité et temps de calcul. Il en résulte que, pour la plupart des champs fracturés, le volume élémentaire (maille) de réservoir fracturé renferme d'innombrables fractures formant un réseau complexe délimitant de multiples blocs matriciels de dimensions et formes variables suivant le contexte géologique. Chacun des blocs réels constitutifs échange des fluides avec les fractures qui l'entourent à un rythme (débit) qui lui est propre car dépendant des dimensions et de la forme de ce bloc particulier.

Face à une telle complexité géométrique du milieu réel, la démarche du spécialiste en ingénierie de réservoir consiste, pour chaque volume élémentaire (maille) de réservoir, à représenter le milieu fracturé réel comme un ensemble de blocs matriciels tous identiques, parallélépipédiques, délimités par un réseau orthogonal et régulier de fractures orientées suivant les directions principales d'écoulement : pour chaque maille, on détermine ainsi les perméabilités dites "équivalentes" de ce réseau de fractures et on définit un bloc matriciel, dit « représentatif » (de la distribution réelle (géologique) des blocs), unique et de forme parallélépipédique. Il est alors possible de formuler et calculer les flux d'échange matrice-fissure pour ce bloc "représentatif", et d'en multiplier le résultat par le nombre de tels blocs dans le volume élémentaire (maille) pour obtenir le flux à l'échelle de cette maille.

Il convient cependant de noter que le calcul des perméabilités équivalentes nécessite de connaître les propriétés d'écoulement (i.e. les conductivités) des fractures discrètes du modèle de réservoir. C'est pourquoi, préalablement à la construction de ce modèle de réservoir équivalent (dit "modèle de réservoir double milieu") tel que décrit plus haut, il est d'abord nécessaire de simuler les réponses en écoulement de quelques puits (tests d'écoulement transitoires ou pseudo-permanents dits aussi tests de puits, tests d'interférences, tests de débit, etc.) sur des modèles extraits du modèle de réservoir donnant une représentation discrète (réaliste) des fractures alimentant ces puits. L'ajustement des réponses en pression/débit simulées sur les mesures de champ permet de calibrer les conductivités des familles de fractures. Bien que ne couvrant qu'une aire limitée (aire de drainage) autour du puits, un tel modèle de simulation de tests de puits comporte encore de très nombreux noeuds de calcul si le réseau de fractures est dense. En conséquence, la taille des systèmes à résoudre et/ou la durée des calculs demeurent souvent prohibitives.

## Etat de la technique

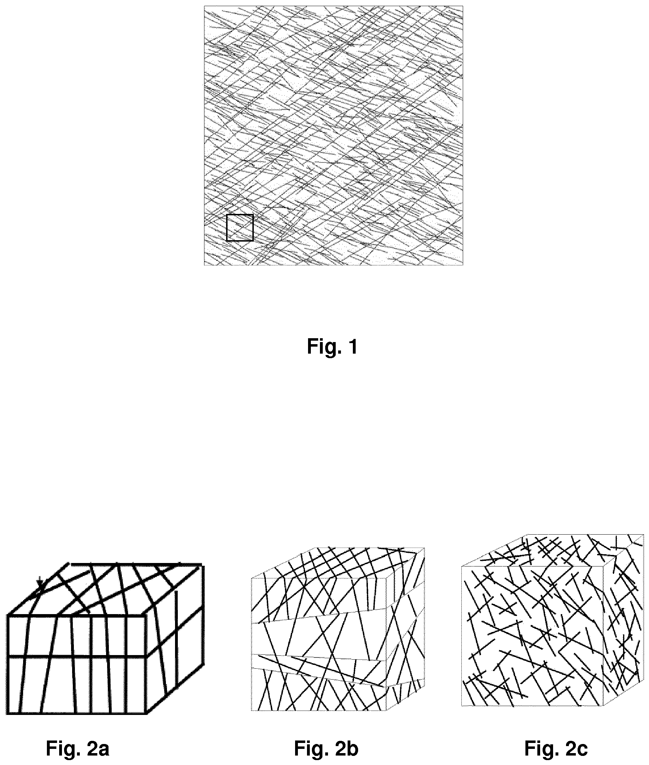

On connait la demande de brevet FR 2967200 (US 8983818) qui décrit un procédé permettant une simplification des réseaux de fractures à l'échelle locale de l'aire de drainage du puits, afin de pouvoir simuler, en un temps de calcul raisonnable, les tests de puits de réservoirs fracturés et calibrer ainsi les conductivités des familles de fractures. Cette calibration hydraulique des fractures aboutit à un jeu de paramètres caractérisant le réseau de fractures (ou modèle de fractures). Ce modèle de fractures est par la suite utilisé pour construire un modèle d'écoulement double milieu à l'échelle du réservoir. Toutefois, cette méthode est uniquement adaptée aux réseaux de fractures sensiblement orthogonales aux couches et continus d'une couche à une autre, c'est-à-dire à des réseaux de fractures dont le comportement de l'écoulement est assimilable à un comportement 2D (cf notamment les demandes de brevet EP 2530493 (US 9103194) et EP 2581767 (US 13/644,479), ainsi que le document (Fourno et al., 2013)). Un exemple d'un tel réseau de fractures est donné en figure 2a. Dans cet exemple, la formation comporte deux couches, le réseau de fractures est continu d'une couche à une autre (assurant ainsi la connectivité d'une couche à une autre) et les fractures sont sensiblement orthogonales aux limites des couches.

On connaît également les demandes de brevet EP 2530493 (US 9103194) et EP 2581767 (US 2013/0096889) qui permettent de prendre en compte des réseaux de fractures qui ne sont pas nécessairement sub-orthogonales et/ou continues d'une couche à une autre, tout en limitant le nombre de noeuds de calcul. Pour y parvenir, la demande EP 2530493 (US 9103194) est basée sur l'utilisation d'un diagramme de Voronoï sur chaque plan de fracture, afin de construire un maillage du milieu fracturé qui donne une bonne estimation des volumes en présence à chaque noeud et des lignes de courant représentant le déplacement des fluides de noeuds à noeuds. Ainsi, les maillages ne comportent que 3 ou 4 noeuds aux intersections, permettant de traiter des millions de fractures en un temps de calcul raisonnable. La demande EP 2581767 (US 2013/0096889) permet de s'affranchir de l'hypothèse restrictive d'avoir autant de noeuds fracture que de noeuds matrice tout en préservant les volumes en place et la physique d'écoulement grâce à un schéma décentré. L'utilisation des structures type arbre (et en particulier de l'octree) permet d'accélérer la construction du maillage du milieu fracture (limitation du nombre de calcul d'intersections), de simplifier les calculs de termes d'échange matrice/fracture ainsi que de bien estimer les volumes matrice associées aux noeuds fractures. Cette méthode, appliquée ici au maillage d'un milieu dual en 3D, s'applique à tout problème dual impliquant de fortes hétérogénéités. Ainsi, les demandes EP 2530493 (US 9103194) et EP 2581767 (US 2013/0096889) permettant de représenter les réseaux de fractures non nécessairement sub-orthogonales et/ou continues d'une couche à une autre, des simulations d'écoulement 3D sur ces réseaux 3D de fractures, réalisées à l'aide d'un simulateur 3D d'écoulement, ont permis d'accéder à une meilleure connaissance des écoulements 3D dans les gisements étudiés. Toutefois, ces méthodes restent aujourd'hui prohibitives en termes de temps de calcul, notamment lorsqu'un nombre important de simulations d'écoulement (à l'échelle du réservoir ou à l'échelle d'une zone d'influence d'un ou plusieurs puits) est nécessaire (cas de l'optimisation de schéma de production, du calage d'historique de production, ou encore de la calibration des paramètres statistiques des familles de fractures par des procédures de sensibilité aux paramètres).

Un des objets de la présente invention concerne un procédé pour représenter de façon appropriée une formation souterraine comportant un réseau de fractures dont au moins une famille peut être caractérisée par des pendages quelconques et/ou par une continuité variable des fractures d'une couche à une autre. En particulier, la présente invention établit un paramètre permettant de qualifier le type de fractures et adapte, en fonction de ce paramètre, la simplification du milieu fracturé. De plus, cette simplification n'est pas localisée à l'échelle locale de l'aire de drainage du puits, mais peut directement être réalisée à l'échelle du réservoir. Ce modèle de fractures simplifié, adapté à la nouvelle génération de simulateur de réservoir 3D, est ensuite utilisé pour optimiser les schémas de production du fluide contenu dans la formation étudiée, et ce, en des temps de calculs abordables.

**Le procédé selon l'invention**

Ainsi, la présente invention concerne un procédé pour l'exploitation d'un fluide au sein d'une formation souterraine comprenant au moins une couche traversée par un réseau de fractures et par au moins un puits, dans lequel on construit une représentation maillée de ladite au moins une couche à partir de mesures de propriétés relatives à ladite au moins une couche, et on définit, au moins pour ladite couche, une zone d'intérêt regroupant un ensemble de mailles de ladite représentation maillée relative à ladite couche et comprenant au moins ledit puits. Le procédé comporte au moins les étapes suivantes pour chacune desdites couches :

A. à partir desdites mesures, on caractérise ledit réseau de fractures par des paramètres statistiques, et on construit, à partir desdits paramètres, un modèle de réseau de fractures discret;

B. pour chacun desdits puits contenus dans ladite zone d'intérêt, on définit au moins trois zones de simplification (ZS1, ZS2, ZS3), une première zone de simplification (ZS1) contenant ledit puits, une seconde zone de simplification (ZS2) ayant comme frontière interne la frontière externe de ladite première zone (ZS1), et une troisième zone de simplification (ZS3) ayant comme frontière interne la frontière externe de ladite seconde zone (ZS2), l'ensemble desdites zones de simplification de l'ensemble desdits puits couvrant l'ensemble des mailles de ladite zone d'intérêt ;

C. à partir d'au moins lesdits paramètres statistiques, on détermine, pour au moins chacune desdites zones de simplification (ZS1, ZS2, ZS3) de ladite zone d'intérêt, un tenseur de perméabilité équivalente et une valeur d'un paramètre P caractérisant l'orientation et la continuité vers les autres couches des fractures dudit réseau ;

D. on détermine une simplification dudit modèle en chacune desdites zones de simplification, en fonction de ladite zone, dudit tenseur de perméabilité équivalente et de ladite valeur dudit paramètre P ;

Puis, à partir de ladite représentation maillée, dudit modèle de réseau de fractures simplifié, et d'un simulateur d'écoulement, on définit un schéma d'exploitation optimal dudit fluide de ladite formation et on exploite ledit fluide de ladite formation en fonction dudit schéma d'exploitation optimal.

Avantageusement, lesdits paramètres statistiques peuvent être choisis parmi les paramètres suivants : densité de fractures, longueur de fractures, orientation des fractures dans l'espace, ouverture de fractures, et distribution de fractures au sein de ladite couche.

Préférentiellement, lesdites zones de simplification peuvent être des cylindres d'axe vertical et de section elliptique, centrées autour dudit puits.

Selon un mode de réalisation de la présente invention, le grand axe d'une desdites zones de simplification peut être orienté selon une direction préférentielle d'écoulement, ladite direction préférentielle étant déterminée à partir d'une diagonalisation dudit tenseur de perméabilité équivalente.

Avantageusement, la distance séparant deux desdites zones peut être déterminée en fonction d'une progression géométrique de raison constante.

Selon un mode de réalisation de la présente invention, on peut ne réaliser aucune simplification dudit modèle de réseau de fractures dans ladite première zone de simplification (ZS1), réaliser une première simplification dans ladite seconde zone (ZS2), et une seconde simplification dans ladite troisième zone (ZS3), ladite seconde simplification étant plus importante que ladite première simplification.

Selon un mode de mise en oeuvre de l'invention, lesdites seconde et/ou troisième zones de simplification (ZS2, ZS3) peuvent être découpées en sous-zones de simplification annulaires.

Avantageusement, lesdites secondes zones de simplification (ZS2) peuvent être découpées en sous-zones de simplification en colonne.

Préférentiellement, lesdites troisièmes zones de simplification (ZS3) peuvent être découpées en sous-zones de simplification localement homogènes.

Selon un mode de mise en oeuvre de l'invention, on peut déterminer ledit paramètre P pour au moins chacune desdites zones de simplification (ZS1, ZS2, ZS3), au moyen d' :

- une valeur d'un paramètre PO mesurant l'orientation dans l'espace desdites fractures de ladite couche selon une formule du type :

$$PO = \frac{dev^2}{90^2} - 2\frac{dev}{90} + 1 \quad \text{avec dev} = \arccos(\overrightarrow{dir_3}.\vec{z}) * \frac{180}{(PI)},$$

et/ou

- une valeur d'un paramètre PC mesurant la continuité desdites fractures de ladite couche vers les autres couches selon une formule du type :

$$PC = \frac{k3}{(k1+k2)},$$

où $k_1$, $k_2$, et $k_3$ sont les valeurs propres dudit tenseur de perméabilité après diagonalisation.

Selon un mode de réalisation de la présente invention, ladite simplification peut consister en le calcul d'au moins une valeur d'espacement entre lesdites fractures, une ouverture desdites fractures, et une valeur de perméabilité.

Selon un mode de mise en oeuvre de l'invention, ladite simplification dudit modèle peut être réalisée selon trois directions de l'espace si le paramètre P caractérise des fractures non sensiblement orthogonales aux couches et/ou continues vers les autres couches.

Selon un autre mode de mise en oeuvre de l'invention, ladite simplification dudit modèle peut être réalisée selon deux directions de l'espace si le paramètre P caractérise des fractures sensiblement orthogonales aux couches et continues vers les autres couches.

Préférentiellement, ledit schéma d'exploitation optimal peut être défini en déterminant un procédé de récupération dudit fluide, ainsi qu'un nombre, une implantation et une géométrie de puits injecteurs et producteurs permettant de satisfaire des critères technico-économiques prédéfinis.

Avantageusement, ladite exploitation dudit fluide en fonction dudit schéma d'exploitation optimal peut consister au moins à forer lesdits puits injecteurs et producteurs et à produire ledit fluide selon ledit procédé de récupération.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon la description ci-dessus, lorsque ledit programme est exécuté sur un ordinateur.

D'autres caractéristiques et avantages du procédé selon l'invention, apparaîtront à la lecture de la description ci-après d'exemples non limitatifs de réalisations, en se référant aux figures annexées et décrites ci-après.

**Présentation succincte des figures**

- La figure 1 présente un exemple de réseau de fractures selon une section horizontale réalisée dans une couche d'une formation souterraine.

- La figure 2a illustre un exemple de réseau de fractures 2.5D dans le cas d'une formation souterraine composée de deux couches.

- La figure 2b présente un exemple de réseau de fractures 3D dans le cas d'une formation souterraine composée de quatre couches.

- La figure 2c illustre un exemple de réseau de fractures 3D dans le cas d'une formation souterraine composée d'une seule couche.

- La figure 3 illustre la création de zones et sous-zones de simplification autour d'un puits traversant une couche d'une formation souterraine.

- La figure 4 illustre un réseau de fractures simplifié DFNs sur une grille fine.

- La figure 5 illustre un modèle de réseau de fractures simplifié DFNs selon l'invention.

- La figure 6 présente le recouvrement entre modèle de réseaux de fractures simplifiés DFNs de sous-zones de simplification voisines.

- La figure 7 illustre un modèle de réseau de fractures simplifié DFNs résultant de la mise en oeuvre de la présente invention dans le cas d'une couche d'une formation souterraine traversée par cinq puits.

**Description détaillée du procédé**

Les définitions suivantes sont utilisées au cours de la description de l'invention :

- Tests de puits : il s'agit d'une injection ou d'une production d'un fluide dans le sous-sol au niveau d'un puits donné. Le test de puits est caractérisé par une courbe de production (quantité de fluide injecté ou produit) et d'une courbe de pression (courbe qui caractérise l'évolution de la pression dans la structure en fonction de la courbe de production). Les tests de puits sont utiles pour calibrer les modèles d'écoulement/de réservoir utilisés pour les simulations d'écoulement.

- Tests d'interférence : il s'agit d'une association de plusieurs tests de puits. Chaque puits est caractérisé par sa courbe de production et sa courbe de pression. La différence avec un test de puits unique par puits réside dans le fait que chaque puits peut être perturbé par le fonctionnement d'un autre....

Le procédé selon l'invention concerne l'exploitation d'un fluide au sein d'une formation souterraine comprenant au moins une couche traversée par un réseau de fractures et par au moins un puits. De façon non limitative, la formation souterraine est constituée d'au moins une couche de roche réservoir (c'est-à-dire d'une roche au moins poreuse et préférentiellement perméable). L'exploitation du fluide est alors appelée exploitation des ressources, et vise à extraire le fluide de cette roche réservoir. Non limitativement, le fluide en question est de type hydrocarbures (huile, gaz, bitume etc).

Une formation souterraine peut être constituée de plusieurs couches géologiques, chaque couche géologique pouvant comprendre un réseau de fractures propre, et chaque réseau pouvant être constitué de plusieurs familles de fractures. Par la suite et à des fins de simplification, on appellera « réseau de fractures 3D » un réseau de fractures constitué d'au moins une famille de fractures de pendages (orientations) quelconques (figure 2c) et/ou caractérisée par une continuité variable des fractures d'une couche à une autre (figure 2b) ; et on appellera « réseaux de fractures 2.5D » un réseau de fractures constitué de familles de fractures sensiblement perpendiculaires aux couches et dont les fractures sont continues d'une couche à une autre (figure 2a).

La présente invention concerne la prise en compte des réseaux de fractures quelconques dans une simulation d'écoulement, et ce en des temps de calcul raisonnables, même dans le cas d'un réseau de fractures 3D. Pour ce faire, la présente invention consiste à modéliser le réseau de fractures de la couche considérée (voir l'étape 1 décrite ci-dessous), puis à le simplifier (voir l'étape 2 décrite ci-dessous), afin de permettre des simulations numériques d'écoulement (voir l'étape 3 décrite ci-dessous) en des temps de calcul raisonnables.

La présente invention requiert de disposer :

- de mesures de propriétés relatives au moins à la couche étudiée : il peut s'agir de mesures de propriétés pétrophysiques réalisées in situ, en différents points de la formation étudiée, telles que la porosité, la perméabilité, et la lithologie (c'est-à-dire le type de roche), la perméabilité relative ou encore la pression capillaire. Ces mesures peuvent avoir été obtenues par exemple par carottage, via des diagraphies réalisées dans des puits, par des campagnes d'acquisition sismique. Mais il s'agit aussi de mesures (débits d'huile, débits d'eau, variations de pression par exemple) liées aux écoulements dans la couche étudiée, obtenues par exemple par des mises en production du fluide en certains puits traversant la formation, au cours de tests de puits ou encore de tests d'interférence ;

- d'une représentation maillée représentative d'au moins la couche étudiée : appelée aussi « modèle de réservoir », il s'agit d'une sorte de maquette du sous-sol construite dans le but de décrire aussi précisément que possible la structure, les propriétés pétrophysiques, les propriétés des fluides, de la formation étudiée, et d'au moins la couche étudiée. Cette maquette est généralement représentée sur un ordinateur, et consiste en un maillage ou grille, chacune des mailles de cette grille comportant une ou plusieurs valeurs de propriétés relatives à la formation étudiée (porosité, perméabilité, saturation, etc). Un modèle de réservoir se doit de vérifier autant que possible les propriétés relatives à la couche étudiée collectées sur le terrain : les données de diagraphie mesurées le long des puits, les mesures réalisées sur des échantillons de roche prélevés dans les puits, les données déduites de campagnes d'acquisition sismique, les données de production comme les débits d'huile, d'eau, les variations de pression etc. Le spécialiste en simulation de réservoir a pleine connaissance de méthodes pour construire une telle représentation maillée d'une formation. A noter que le modèle de réservoir peut se confondre avec le modèle géologique lorsque la puissance informatique est suffisante pour permettre des calculs numériques de simulation d'écoulement sur une grille à mailles fines. Dans les autres cas, le spécialiste pourra avoir recours à une technique d' « upscaling » (mise à l'échelle) afin de passer d'un modèle aux mailles fines (le modèle géologique) à un modèle aux mailles plus grossières (le modèle de réservoir). Cette étape d'upscaling peut être réalisée par exemple à l'aide du logiciel CobraFlow (IFP Energies nouvelles, France).

- une zone d'intérêt (ZOI), regroupant un ensemble de mailles de ladite représentation maillée relatives à la couche étudiée et comprenant au moins le puits traversant la couche concernée : les dimensions et la géométrie de cette zone peuvent être variables selon le mode de mise en oeuvre de la présente invention considéré. Dans le cas le plus général, c'est-à-dire lors de simulations de production du fluide de la formation étudiée mises en oeuvre pour tester différents schémas d'exploitation, la ZOI peut correspondre à l'ensemble du réservoir, et peut comprendre au moins deux puits, et préférentiellement l'ensemble des puits. Dans le cas où préalablement à cette simulation, on procédera à une calibration du modèle utilisé pour la simulation, via des tests de puits, la ZOI considérée correspondra avantageusement à une partie du réservoir, d'une dimension kilométrique, incluant un seul puits. Dans le cas de tests d'interférence, la ZOI peut alors correspondre à une portion du réservoir, et comprend plusieurs puits. A noter que la ZOI peut être discontinue et être par exemple formée d'une somme de sous-zones d'intérêt définies localement autour d'un nombre de donné de puits.

- d'un simulateur d'écoulement : un simulateur d'écoulement est un programme numérique, exécuté sur un ordinateur, qui est utilisé pour prédire l'écoulement de fluides au sein des différentes couches d'une formation. La simulation d'écoulement, dite aussi simulation de réservoir, consiste à prédire numériquement la production d'un fluide piégé dans une ou plusieurs couches d'une formation souterraine, la production nécessitant l'existence d'au moins un puits injecteur (dans lequel on injecte un autre fluide, qui va chasser le fluide piégé) et d'un puits producteur (vers lequel le fluide piégé, chassé va se déplacer et duquel il va pouvoir être extrait). Avantageusement, on aura recours à un simulateur d'écoulement dit « double milieu », qui permet de modéliser les échanges entre les blocs de roches non fracturés et le réseau de fracture, sans nécessiter la discrétisation de ces blocs. Un exemple d'un tel simulateur est le logiciel PUMAFLOW (IFP Energies nouvelles, France).

Le procédé selon l'invention comporte au moins les étapes suivantes, les étapes 1 et 2 étant répétées pour chacune des couches de la formation étudiée :

**1. Modélisation du réseau de fractures**

    **1.1. Détermination de paramètres statistiques**

    **1.2. Construction d'un modèle de réseau de fractures discret**

**2. Simplification du modèle de réseau de fractures**

    **2.1. Définition de zones de simplification**

    **2.2. Détermination d'un tenseur de perméabilité équivalente**

    **2.3. Détermination d'un paramètre P caractérisant la géométrie des fractures**

    **2.4. Simplification du modèle de réseau de fractures discret**

**3- Exploitation du fluide de la formation**

Les principales étapes de la présente invention sont détaillées ci-après. Les étapes 1 et 2 seront déclinées pour une seule couche de la formation étudiée et sont à répéter pour l'ensemble des couches de la formation. La mise en oeuvre de l'invention nécessite l'existence d'au moins un puits traversant chacune des couches considérées, mais la mise en oeuvre de l'invention ne nécessite pas de prendre en compte tous les puits traversant une couche donnée.

**1. Modélisation du réseau de fractures**

Au cours de cette étape, il s'agit de déterminer un modèle du réseau de fractures de la couche étudiée, respectant les mesures de propriétés relatives à la couche réalisées in situ.

La réalisation de cette étape peut comporter au moins les sous-étapes suivantes :

**1.1. Détermination de paramètres statistiques**

Au cours de cette sous-étape, il s'agit de déterminer des paramètres statistiques permettant de caractériser le réseau de fractures de la couche étudiée. Cette sous-étape requiert des mesures, permettant une caractérisation directe ou indirecte de la fracturation.

Des informations sur la fracturation d'une couche géologique peuvent être obtenues via des :

- carottes, extraites de la formation étudiée, et à partir desquelles une étude statistique des fractures intersectées peut être effectuée ;

- affleurements, qui présentent l'avantage de fournir une vision à grande échelle du réseau de fractures ;

- images sismiques, permettant d'identifier de grands événements géologiques.

Selon l'invention, on utilise des paramètres statistiques (notés PSF par la suite) afin de caractériser les fractures observées lors des mesures. Selon un mode de mise en oeuvre de l'invention, on caractérise la densité des fractures observées, leur longueur, leur orientation dans l'espace, leur ouverture, et leur distribution au sein de la couche étudiée.

On dispose ainsi de paramètres statistiques (PSF) décrivant le réseau de fractures de la couche étudiée, à partir desquels un modèle de ce réseau peut être construit, à l'échelle de chacune des mailles de la représentation maillée.

**1.2. Construction d'un modèle de réseau de fractures discret**

Selon l'invention, on construit ensuite une image réaliste du réseau de fractures caractérisé par les paramètres statistiques (PSF) déterminés à la sous-étape précédente réelles, en passant par un modèle de réseau de fractures discret (connu sous l'acronyme DFN, pour « Discrète Fracture Network » en anglais).

Pour ce faire, à partir d'une représentation maillée de la formation étudiée (et au moins de la couche considérée), on associe en chaque maille, une représentation détaillée (DFN) de la complexité interne du réseau de fractures, aussi fidèle que possible des observations directes et indirectes du réservoir. La figure 1 présente une section horizontale prise dans une couche d'une formation, et le réseau de fractures, observable à l'échelle de la formation, pour cette section. La figure 2 présente le réseau discret de fractures visibles à l'échelle de la maille tridimensionnelle dont les limites 2D sont présentées par le carré en figure 1. On peut observer en figure 2 un ensemble de blocs matriciels poreux, de formes et tailles irrégulières, délimités par des fractures. Ce réseau de fractures discret constitue une image représentative du réseau réel de fractures délimitant les blocs matriciels.

Pour construire un modèle de réseau de fractures discret (DFN) en chaque maille de la représentation maillée, on peut utiliser des logiciels de modélisation, bien connus des spécialistes, tel que le logiciel FRACAFlow® (IFP Energies nouvelles, France). Ces logiciels utilisent les paramètres statistiques (PSF) déterminés précédemment.

## 2. Simplification du modèle de réseau de fractures

En raison de son extrême complexité géométrique, le modèle de réseau de fractures (DFN) obtenu à l'étape précédente et représentatif du réservoir fracturé réel, ne peut être utilisé pour simuler, i.e. reproduire et/ou prédire, les écoulements locaux autours des puits. En effet, le DFN obtenu à l'étape précédente présente bien souvent un grand nombre de fractures et de nombreux points d'intersection entre fractures. Le maillage sera donc trop complexe ou présentera trop de noeuds de calcul, rendant les simulations inabordables en temps de calcul. L'objectif de cette étape est de déterminer un modèle de réseau de fractures simplifié, respectant néanmoins les mesures d'écoulement réalisées in situ.

Ainsi, au cours de cette étape, il s'agit de simplifier le modèle de réseau de fractures discret déterminé à l'étape précédente pour la couche considérée. Selon l'invention, cette simplification est différente en fonction des zones de simplification décrites autour de chacun des puits considérés pour la couche en question (voir l'étape 2.1). Chaque zone de simplification est caractérisée par 2 paramètres qui lui sont propres : un tenseur de perméabilité équivalente (voir l'étape 2.2) et un paramètre (P) caractérisant à la fois l'orientation et la continuité (vers les autres couches de la formation étudiée) du réseau de fractures de cette couche (voir l'étape 2.3).

### 2.1. Définition de zones de simplification

Au cours de cette sous-étape, il s'agit de définir des zones de simplification pour chacun des puits considérés. Selon l'invention, on définit autour de chaque puits, au moins trois zones de simplification (ZS1, ZS2, ZS3), la première desdites zones de simplification (ZS1) contenant ledit puits, la seconde desdites zones de simplification (ZS2) ayant comme frontière interne la frontière externe de ladite première zone (ZS1), et la troisième desdites zones de simplification (ZS3) ayant comme frontière interne la frontière externe de ladite seconde zone (ZS2).

De plus, selon l'invention, l'ensemble des zones de simplification pour l'ensemble des puits considérés doit couvrir l'ensemble des mailles de la ZOI, et ce quel que soit le nombre de puits. L'invention n'est pas limitée à la définition de trois zones de simplification pour chacun des puits considérés, et une mise en oeuvre de l'invention peut être réalisée pour NZ zones de simplification, avec NZ≥3.

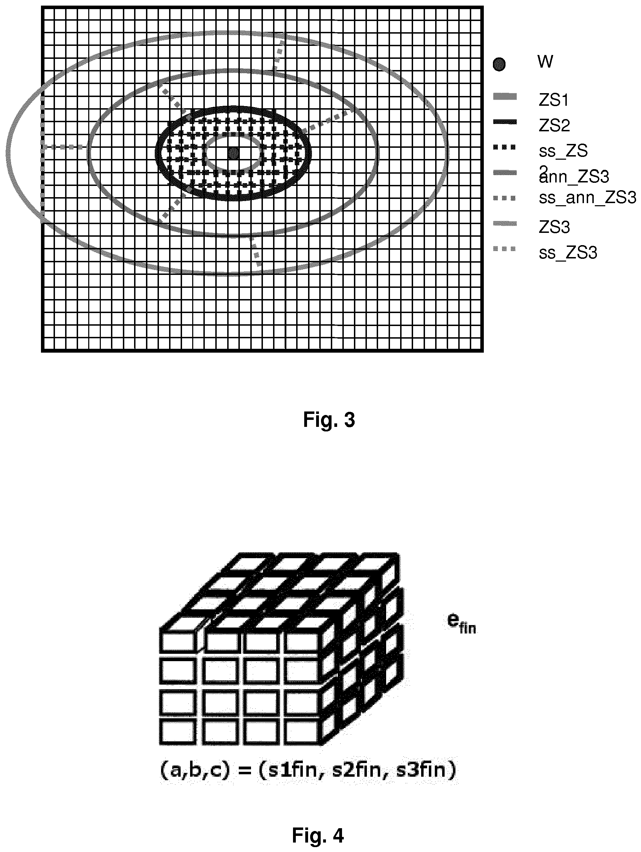

Selon un mode préférentiel de mise en oeuvre de l'invention, les zones de simplification correspondent à des cylindres de section elliptique, l'axe de révolution des cylindres pouvant être orienté selon un axe vertical (voir par exemple les sections horizontales des zones ZS1, ZS2 et ZS3 créées autour d'un puits W en figure 3). Les sections dans un plan horizontal des zones de simplification sont alors des ellipses (ZS1) ou des couronnes elliptiques (ZS2 et ZS3) concentriques, centrées autour d'un puits. Selon un autre mode de réalisation de l'invention, les zones de simplification correspondent à des cylindres de section elliptique, l'axe de révolution des cylindres pouvant être orienté selon un axe défini par la perpendiculaire au pendage (ligne de plus grande pente) de la couche considérée, ou encore un axe défini par l'axe du puits considéré.

Selon un mode de mise en oeuvre de l'invention, une zone de simplification ZS2 et/ou une zone ZS3 est découpée en N sous-zones de simplification en rajoutant, entre les frontières internes et externes de la zone considérée, N-1 frontières intermédiaires, la géométrie de la frontière intermédiaire n (avec n compris entre 1 et N-1) pouvant résulter d'une combinaison linéaire (par exemple fonction de n et N) des courbes décrivant les frontières internes et externes de la zone de simplification considérée. Par exemple, dans le cas d'une zone de simplification cylindrique de section elliptique, le découpage de cette zone de simplification en deux sous-zones de simplification revient à rajouter une frontière cylindrique intermédiaire (voir par exemple la frontière ann_ZS3 en figure 3), de section elliptique. On parlera par la suite de « sous-zone annulaire » pour ce type de sous-zones de simplification. Ce mode de mise en oeuvre sera préféré dans le cas de propriétés d'écoulement relativement homogènes.

Selon un mode de réalisation dans lequel les zones de simplification ou sous-zones de simplification sont des cylindres de section horizontale à géométrie elliptique, on peut très préférentiellement orienter les ellipses (direction du grand axe de chaque ellipse) en fonction des directions d'écoulement préférentielles déduites d'un calcul de perméabilités équivalentes. Un tel calcul est précisément décrit à la sous-étape suivante. De même, le rapport de forme de l'ellipse

(en notant $L_{max}$ la demi-longueur du grand axe de l'ellipse, et $L_{min}$ la demi-longueur du petit axe de l'ellipse, ce rapport de forme est défini par $L_{max}/L_{min}$) et la distance entre ellipses concentriques (distance séparant les limites elliptiques intérieure et extérieure d'une couronne concentrique donnée) peuvent être déterminées en fonction de l'anisotropie d'écoulement dans la couche étudiée.

Selon un mode particulier de mise en oeuvre de l'invention, on peut définir le rapport de forme selon une formule du type :

$$\frac{L_{max}}{L_{min}} = \sqrt{\frac{\max(k_1, k_2)}{\min(k_1, k_2)}}$$

où $k_1$ et $k_2$ sont respectivement les valeurs propres, obtenues après diagonalisation du tenseur de perméabilité équivalente, dans les directions principales les plus proches d'un plan horizontal.

Selon un autre mode particulier de mise en oeuvre de l'invention, afin de définir la distance entre ellipses concentriques (frontières entre zones), on opte pour un critère de dimensionnement conforme à une précision de modélisation uniformément distribuée sur le domaine de simulation, qui consiste à fixer les demi-longueurs du grand axe $L_{max}$ (ou du petit axe $L_{min}$) de 2 ellipses successives i et i+1 (avec i variant de 1 à l, et l au moins égal à 3) à des valeurs en progression géométrique de raison r constante (égale à 2 par exemple), selon une formule du type :

$$\frac{L_{max(i+1)}}{L_{max(i)}} = \frac{L_{min(i+1)}}{L_{min(i)}} = r$$

Cette règle permet de donner un poids égal à chaque zone i (i=1 à l, l≥3) en termes de différence de pression constatée sur chaque couronne en régime d'écoulement permanent.

Selon un mode préféré de mise en oeuvre de l'invention, une zone de simplification ZS2 est découpée en un nombre de sous-zones égal au nombre de colonnes de mailles présents dans la zone ZS2. Le terme "colonne de mailles" est employé pour désigner un "empilement" de mailles verticales de la représentation maillée Ces sous-zones seront alors des quadrilatères dont les longueurs des cotés correspondront à la discrétisation suivant les axes x et y de la représentation maillée (sous-zones ss_ZS2 en figure 3). On parlera par la suite de « sous-zone de simplification en colonne » pour ce type de sous-zones de simplification.

Selon un mode préféré de mise en oeuvre de l'invention, une zone de simplification ZS3 est découpée en sous-zones de simplification, en tenant compte des hétérogénéités des propriétés d'écoulement. On peut par exemple, de façon non limitative, délimiter des sous-zones de simplification d'une zone ZS3 en regroupant des sous-ensembles de mailles ayant des propriétés d'écoulement voisines. Par exemple dans le cas d'une zone ZS3 correspondant à un cylindre d'axe vertical et de section elliptique, un balayage angulaire, centré sur le puits, est effectué. Les mailles contenues par degré échantillonné sont regroupées en une colonne de mailles. Ainsi, la zone ZS3 est caractérisée par au plus 360 colonnes de mailles. Pour chacune de ces colonnes de mailles, un calcul du tenseur de perméabilité de fracture équivalente est effectué (cf. étape suivante). Ce tenseur permet de caractériser les propriétés dynamiques du réseau de fractures de la colonne de mailles étudiée. Les valeurs de perméabilité et l'orientation de l'écoulement obtenues sont alors comparées entre colonnes de mailles voisines. Si les propriétés équivalentes de deux colonnes de mailles voisines sont proches, ces deux colonnes de mailles seront considérées comme appartenant à une même sous-zone. Dans le cas contraire (différence de 20 % sur les valeurs de perméabilité principale ou de 10 degrés sur les directions principales de perméabilité par exemple), les deux colonnes de mailles sont affectées à des sous-zones différentes. De cette manière, la limite extérieure, dans un plan horizontal, de la zone ZS3 considérée est divisée en arcs de forme elliptique (cf figure 3). Les limites dans un plan horizontal des sous-zones sont alors obtenues en reliant les points-extrémités de chacun de ces arcs au centre (puits W) de l'ellipse (lignes en pointillés ss_ann_ZS3 et ss_ZS3 en figure 3) : chaque sous-zone à simplifier est ainsi définie comme la réunion des sous-ensembles de mailles constituant l'aire comprise entre le cloisonnement radial intra-zone (lignes en traits pointillés ss_ann_ZS3 et ss_ZS3) et les limites elliptiques interzones (lignes en trait plein ann_ZS3 et ZS3). On obtient de cette manière des sous-zones de simplification de la zone ZS3 sensiblement homogènes quant aux propriétés d'écoulement, chacune étant caractérisée par une perméabilité équivalente propre. On parlera par la suite de « sous-zone de simplification localement homogène » pour ce type de sous-zones de simplification.

Selon un mode de mise en oeuvre de l'invention, un découpage en sous-zones de simplification localement homogènes peut être appliqué, en sus, à des sous-zones de type annulaires pour une zone de simplification ZS3 (sous-zones ss_ann_ZS3 et ss_ZS3 en figure 3).

Selon un mode de mise en oeuvre de l'invention, un découpage en sous-zones de simplification en colonne peut être appliqué, en sus, à des sous-zones de type annulaires pour une zone de simplification ZS2.

## 2.2. Détermination d'un tenseur de perméabilité équivalente

Au cours de cette sous-étape, il s'agit de calculer un tenseur de perméabilité équivalente pour au moins chacune des zones de simplification déterminées à la sous-étape précédente, l'objectif étant, dans la sous-étape suivante, de remplacer le réseau de fractures de chaque zone de simplification par un réseau simplifié possédant les mêmes propriétés d'écoulement que le réseau originel.

Très préférentiellement, dans le cas où des sous-zones de simplification ont été définies pour une zone de simplification donnée à la sous-étape précédente, on calcule un tenseur de perméabilité équivalente en chacune de ces sous-zones de simplification.

Le calcul de perméabilités équivalentes est effectué à partir du modèle de réseau de fractures DFN, ou directement à partir des PSF. Ce type de calcul des perméabilités équivalentes est bien connu des spécialistes. On peut par exemple utiliser la méthode numérique de calcul de propriétés équivalentes de milieux fracturés, implémentée dans le logiciel FracaFlow (IFP Energies nouvelles, France) et rappelé ci-après.

Selon un mode de mise en oeuvre de l'invention, un tenseur de perméabilité, représentatif des propriétés d'écoulement du réseau de fractures discrétisé (DFN) peut être obtenu par exemple par l'une des deux méthodes de mise à l'échelle (méthodes dites d'upscaling) suivantes :

- une première méthode, analytique, dite "local analytical upscaling", est basée sur une approche analytique décrite par exemple dans le document (Oda, 1985) ou encore dans la demande de brevet FR 2918179 (US 8078405). Cette méthode présente l'avantage d'être très rapide. Son domaine d'application se limite, toutefois, à des réseaux de fractures bien connectés. Dans le cas contraire, des erreurs importantes sur le tenseur de perméabilité peuvent être constatées.

- une seconde méthode, numérique, dite "local numerical upscaling", est décrite dans le document (Bourbiaux, et al., 1998), ou dans la demande de brevet FR 2757947 (US 6023656) pour le calcul des perméabilités équivalentes. Cette méthode est basée sur la résolution numérique des équations d'écoulement sur un maillage discret du réseau de fractures pour différentes conditions aux limites appliquées à la colonne de mailles de calcul considéré. Le tenseur de perméabilités équivalentes est obtenu par identification des rapports entre débit et perte de charge aux limites du domaine de calcul. Cette approche, plus coûteuse que la précédente, présente l'avantage de bien caractériser un réseau donné (même peu connecté).

Selon un mode de réalisation de la présente invention, afin de profiter au mieux des avantages des deux méthodes de mise à l'échelle, le tenseur de perméabilité est déterminé par l'une ou l'autre de ces deux méthodes, par exemple, suivant la procédure de sélection décrite dans le document FR 2918179 (US 8078405), fondée sur la valeur de l'indice de connectivité du réseau de fractures. Cet indice, représentatif du rapport entre le nombre d'intersections entre fractures et le nombre de fractures, est calculé pour chaque unité de la colonne de mailles considérée. Sa valeur permet de considérer le réseau comme très bien connecté, peu/mal connecté ou non connecté. Le choix de la méthode de mise à l'échelle est alors effectué, comme décrit dans (Delorme, et al., 2008), et résumé ci-après :

- Réseau bien connecté : pour ce cas caractérisé par un indice de connectivité voisin de 3 ou dépassant 3 (au moins 3 intersections par fracture du réseau en moyenne), la méthode d'upscaling analytique est choisie car sa précision est garantie compte tenu de la bonne connectivité du réseau, avec l'avantage supplémentaire essentiel de la rapidité.

- Réseau peu/mal connecté : dans ce cas, l'indice de connectivité est compris entre 1 et 3 (ce qui correspond à un nombre d'intersections de fractures compris entre une et trois fois le nombre de fractures) et la méthode d'upscaling numérique est utilisée pour calculer de manière fiable le tenseur de perméabilité.

- Lorsque le réseau est très peu voire non connecté (nombre d'intersections voisin ou inférieur au nombre de fractures), les fractures originelles (peu nombreuses) sont conservées, et il n'y a pas lieu de simplifier le réseau de fractures.

Selon un mode de mise en oeuvre de l'invention, on diagonalise le tenseur de perméabilité équivalente ainsi calculé afin de déterminer les trois directions principales de l'écoulement, que l'on notera par la suite $dir_1$, $dir_2$ et $dir_3$, la direction $dir_1$ (respectivement $dir_2$, et $dir_3$) étant choisie de sorte à ce que son angle avec l'axe des abscisses (respectivement l'axe des ordonnées, l'axe vertical) soit le plus faible. On notera alors $k_1$, $k_2$, $k_3$ les valeurs propres de ce tenseur, associées respectivement aux trois directions principales $dir_1$, $dir_2$ et $dir_3$.

Selon un mode de mise en oeuvre de l'invention, on calcule en outre une porosité de fractures représentative du volume de fractures de la zone ou sous-zone. Cette porosité $\phi_f$ est obtenue via une formule du type :

$$\phi f = \frac{Volume\ de\ fractures}{Volume\ total},$$

où le volume de fractures présentes dans le volume considéré peut être obtenu à partir du PSF ou du DFN déterminés à l'étape 1, et Volume total est le volume total de la zone ou sous-zone de simplification.

Selon un mode de mise en oeuvre de l'invention, on calcule en outre les dimensions caractéristiques d'un bloc matriciel représentatif (dit équivalent) pour chaque zone de simplification, et préférentiellement pour chaque sous-zone de simplification. On notera a, b et c les dimensions caractéristiques de ce bloc matriciel respectivement dans les directions $dir_1$, $dir_2$ et $dir_3$. Un tel calcul peut être réalisé selon la technique décrite dans les demandes de brevet FR 2757957 (US 6064944) ou FR2923930 (US 8688424).

## 2.3. Détermination d'un paramètre P caractérisant la géométrie des fractures

A partir d'au moins les paramètres statistiques (PSF) déterminés à l'étape précédente, on détermine une valeur d'un paramètre, noté P; caractérisant à la fois l'orientation dans l'espace et la continuité vers les autres couches des fractures du réseau de fractures contenus au moins dans chacune des zones de simplification déterminées à la sous-étape 2.1. Ainsi, la valeur de ce paramètre P va permettre de déterminer si le réseau de fractures d'intérêt est de type 2.5D ou de type 3D dans chacune des zones de simplification.

Selon un mode préféré de mise en oeuvre de l'invention, un paramètre P est déterminé, le cas échéant, pour chaque sous-zone de simplification définie à l'étape 2.1, en particulier dans le cas d'hétérogénéités des propriétés d'écoulement, et très préférentiellement dans le cas où des sous-zones de simplification dites localement homogènes ont été prédéfinies.

Selon un mode de mise en oeuvre de la présente invention, on définit un paramètre binaire P valant 0 ou 1 pour chaque (sous-)zone de simplification. La valeur 1 du paramètre P indique que les familles de fractures du réseau de fractures contenu dans une sous-zone de simplification donnée sont à la fois sensiblement orthogonales aux limites de la couche considérée et sensiblement continues vers les autres couches de la formation (figure 2a). La valeur 0 indique que le réseau de fractures de la (sous-)zone de simplification considérée comprend au moins une famille de fractures de pendages quelconques (figure 2c) et/ou caractérisée par une continuité variable des fractures d'une couche à une autre (figure 2b). Autrement dit, la valeur 1 du paramètre P indique que le réseau de fractures de la (sous-)zone de simplification considérée est 2.5D, alors que la valeur 0 du paramètre P indique que le réseau de fractures de la (sous-)zone de simplification considérée est 3D

Selon un mode de mise en oeuvre de l'invention, on détermine un paramètre PC qualifiant la continuité de la fracturation d'une couche donnée vers les autres couches de la formation. Le calcul de ce paramètre peut être effectué par zone de simplification ou par sous-zone de simplification. Pour ce faire, on considère un tenseur de perméabilité équivalente calculée sur la hauteur de la couche considérée pour la (sous-)zone de simplification considérée (cf sous-étape 2.2), et on diagonalise ce tenseur. Si $k_3$ (perméabilité sub-verticale) est très différente de $k_1+k_2$ (somme des perméabilités sub-horizontales), alors la fracturation n'est pas continue sur la hauteur de la couche considérée pour la (sous-)zone considérée. Plus précisément, on peut définir un paramètre PC selon une formule du type :

$$PC = \frac{k3}{(k1+k2)}.$$

Lorsque $PC < \varepsilon_c$ où $\varepsilon_c$ est un seuil prédéfini par le spécialiste, alors on peut considérer que le réseau de fractures n'est pas continu d'une couche à une autre dans la (sous-)zone de simplification considérée. Préférentiellement, on choisira $\varepsilon_c$=0.8. Ce critère très restrictif implique que la plupart des réseaux de fractures naturelles seront traités comme des réseaux de fractures 3D.

Selon un mode de mise en oeuvre de l'invention, on détermine un paramètre PO qualifiant l'orientation dans l'espace de la fracturation d'une couche donnée. Le calcul de ce paramètre peut être effectué par zone de simplification ou par sous-zone de simplification. Plus précisément, on considère un tenseur de perméabilité équivalente calculée sur la hauteur de la couche considérée par (sous-)zone de simplification (cf sous-étape 2.2), et on diagonalise ce tenseur. Si la direction principale associée à la composante $k_3$ de ce tenseur est caractérisée par une déviation par rapport à la normale à la couche inférieure à un certain seuil prédéfini par le spécialiste, on considérera que les fractures ne sont pas sensiblement orthogonales pour la (sous-)zone de simplification considérée. On peut par exemple définir un paramètre PO de la forme :

$$PO = \frac{dev^2}{90^2} - 2\frac{dev}{90} + 1 \quad \text{avec dev} = \arccos(\overrightarrow{dir_3}.\vec{z}) * \frac{180}{(PI)},$$

*arccos* fournissant un angle en radians entre [0, PI] converti en degrés pour obtenir dev.

Lorsque PO < $\varepsilon_o$ où $\varepsilon_o$ est un seuil prédéfini par le spécialiste, alors on considère que le réseau de fractures de la couche considérée, pour la (sous-)zone considérée, n'est pas sensiblement orthogonal aux limites de la couche considérée. Préférentiellement, on choisira $\varepsilon_o$=0.81 (ce qui correspond à une déviation par rapport à la normale à la couche de 9°).

Selon un mode de mise en oeuvre, on définit la valeur du paramètre P de la façon suivante :

- le paramètre P vaut 1 si à la fois le paramètre PC et le paramètre PO sont supérieurs ou égaux à 0.8. Dans ce cas, on considère que le réseau de fractures de la couche considérée, pour la (sous-)zone considérée, est (sensiblement) 2.5D.

- le paramètre P vaut 0 si au moins l'un des paramètres PC ou PO est inférieur strictement à 0.8. Dans ce cas, on considère que le réseau de fractures de la couche considérée, pour la (sous-)zone considérée, est (sensiblement) 3D.

### 2.4. Simplification du réseau de fractures

Au cours de cette étape, il s'agit de simplifier le réseau de fractures en chacune des mailles des zones de simplification définies précédemment (ce qui revient à une simplification dans chacune des mailles de la zone d'intérêt ZOI puisque l'ensemble des mailles de l'ensemble des zones de simplification correspond à l'ensemble des mailles de la zone d'intérêt ZOI), ladite simplification étant fonction de la zone de simplification considérée, du tenseur de perméabilité équivalente déterminé précédemment et de la valeur du paramètre (P) caractérisant l'orientation et la continuité vers les autres couches des fractures du réseau de fractures de la couche considérée.

Ainsi selon l'invention, la simplification du modèle de réseau de fractures est réalisée de manière différente d'une zone de simplification à une autre.

Selon un mode préféré de mise en oeuvre de l'invention, la simplification est réalisée de la façon suivante :

- aucune simplification dudit modèle de réseau de fractures n'est réalisée dans la première zone de simplification ZS1. En effet, la zone de simplification ZS1 étant la plus proche du puits, il est fortement souhaitable de ne pas simplifier le modèle de réseau de fractures, de sorte à correctement modéliser les phénomènes transitoires d'écoulement ayant lieu aux abords du puits ;

- une première simplification, modérée, est appliquée dans la seconde zone ZS2. En effet, la zone de simplification ZS2 étant plus éloignée du puits considéré que la zone ZS1, une simplification du modèle de réseau de fractures est envisageable, mais il est préférable que les variations locales des propriétés d'écoulement dans cette zone soient respectées. Selon un mode de mise en oeuvre très préféré de l'invention, on simplifie une zone ZS2 par sous-zones de simplification. Préférentiellement, les sous-zones de simplification d'une zone ZS2 sont de type colonne (cf la sous-étape 2.2).

- une deuxième simplification, importante, est réalisée dans la troisième zone ZS3. Etant plus éloignée du puits considéré, il est acceptable d'être moins précis dans la détection des hétérogénéités que dans le cas des zones de type ZS2. Selon un mode de mise en oeuvre préféré de l'invention, on simplifie une zone ZS3 par sous-zones de simplification. Préférentiellement, les sous-zones de simplification d'une zone ZS3 sont de type localement homogène (cf la sous-étape 2.2). Avantageusement on pourra au préalable découper une zone de simplification ZS3 en sous-zones de simplification annulaires, avant de découper les sous-zones de type annulaires en sous-zones de type localement homogène.

A partir du découpage en zones de simplification (préférentiellement en sous-zones de simplification dans le cas d'un réseau de fractures hétérogènes), d'une valeur de perméabilité équivalente et d'une valeur d'un paramètre P attribuées à chaque zone de simplification (préférentiellement à chaque sous-zone de simplification), on crée un modèle de réseau de fractures simplifié (DFNs), équivalent au modèle de réseau de fractures originel (DFN) en terme d'écoulement par (sous-)zone de simplification. Les calculs qui vont suivre vont être indifféremment appliqués à une zone de simplification ou à une sous-zone de simplification. On note par la suite $keq_m^{ijk}$ la perméabilité équivalente d'un bloc matriciel m de dimension (a,b,c), et $k_m^{ijk}$ la perméabilité réelle de la roche (dite encore matrice) dans une maille ijk.

Selon l'invention, on détermine au cours de cette étape au moins une valeur d'espacement entre fractures, une ouverture de fracture, et une valeur de perméabilité, ou encore toute combinaison entre ces paramètres.

Selon un mode de mise en oeuvre de l'invention, on détermine un espacement de fractures $s_1^{gros}$ du modèle de réseau de fractures simplifié (DFNs) dans la direction principale d'écoulement $dir_1$ selon une formule du type :

$$s_1^{gros} = DC/NG, \tag{1}$$

- où NG est un nombre entier contrôlant la connectivité. Il représente le nombre minimal de fractures simplifiées devant intersecter le plus petit côté de la (sous-)zone à simplifier de façon à assurer la connectivité entre (sous-)zones simplifiées ; préférentiellement, on choisit NG=6.

- et DC est une dimension caractéristique de la (sous-)zone considérée. Selon un mode de mise en oeuvre de l'invention, la dimension caractéristique d'une (sous-)zone est la plus petite longueur d'un quadrilatère inscrit dans la (sous-)zone.

Selon un mode de réalisation de l'invention, si $s_1^{gros}$ est supérieur à un seuil $s_1^{max}$ prédéfini par le spécialiste, alors on fixe $s_1^{gros}$ à $s_1^{max}$. Avantageusement, on utilisera $s_1^{max}$ égal à DC/6.

Selon un mode de mise en oeuvre de l'invention, on détermine ensuite l'espacement de fractures du modèle de réseau de fractures simplifié (DFNs) dans les autres directions principales d'écoulement $dir_2$ et $dir_3$ en posant :

$$s_2^{gros} = s_1^{gros} \tag{2}$$

$$s_3^{gros} = s_1^{gros} \tag{3}$$

Selon un mode de mise en oeuvre de l'invention pour lequel on a calculé une dimension caractéristique de bloc matriciel (a,b,c) (voir étape 2.2), on détermine un paramètre de grossissement G (d'écartement des fractures) par une formule du type :

$$G = s_1^{gros}/a. \tag{4}$$

Selon un autre mode de mise en oeuvre de l'invention pour lequel une dimension caractéristique de bloc matriciel (a,b,c) n'a pas été calculée, on fixe G égal à 1.

Selon un mode de mise en oeuvre de l'invention, on détermine l'espacement de fractures du modèle de réseau de fractures simplifié (DFNs) dans les autres directions principales d'écoulement $dir_2$ et $dir_3$ selon des formules du type :

$$s_2^{gros} = G.b \tag{5}$$

$$s_3^{gros} = G.c \tag{6}$$

Selon un mode particulier de mise en oeuvre de l'invention, on peut déterminer des conductivités de fractures $C_{f1}^{gros}$, $C_{f2}^{gros}$ et $C_{f3}^{gros}$, dont les valeurs permettent de conserver les flux, c'est-à-dire également les perméabilités équivalentes, soit :

$$C_{f1}^{gros} = s_1^{gros} .(-k_1 + k_2 + k_3) / 2 \tag{7}$$

$$C_{f2}^{gros} = s_2^{gros} .(k_1 - k_2 + k_3) / 2 \tag{8}$$

$$C_{f3}^{gros} = s_3^{gros} .(k_1 + k_2 - k_3) / 2 \tag{9}$$

Les numéros des indices f1, f2, f3 des conductivités indiquent la direction de la normale de la fracture simplifiée. Par exemple $C_{f1}^{gros}$ est la conductivité à affecter aux fractures du réseau grossier dont la normale est orientée suivant la direction $dir_1$, direction principale de l'écoulement proche de l'axe des abscisses de la représentation maillée de la couche considérée.

Selon un mode de mise en oeuvre de l'invention, on calcule une ouverture de fracture $e^{gros}$ permettant de conserver la porosité de fracture $\phi_f$ du réseau initial, selon une formule du type :

$$e^{gros} = \phi_f /(1/s_1^{gros}+1/s_2^{gros}+1/s_3^{gros}), \qquad (10)$$

le calcul de la porosité de fractures $\phi_f$ étant donné à l'étape 2.2

Selon un mode de mise en oeuvre de l'invention pour lequel on a calculé une dimension caractéristique de bloc matriciel (a,b,c) (voir étape 2.2), on calcule une perméabilité de matrice équivalente $keq_m^{ijk}$ dans la maille ijk conservant la valeur du paramètre d'échange matrice-fissure de la façon suivante :

$$keq_m^{ijk} = G^2 k_m^{ijk} \qquad (11)$$

Selon l'invention, si la valeur du paramètre P associé à la (sous-)zone de simplification considérée indique que toutes les familles du réseau de fractures considéré sont, à la fois, sensiblement orthogonales à la couche considérée et sensiblement continues vers les autres couches de la formation, les valeurs des paramètres définis ci-dessus dans la direction principale 3 (c'est-à-dire $dir_3$) ne sont pas considérées ou encore sont annulées. En effet, dans ce cas, c étant très grand, cela implique la non existence de la famille 3 de fractures simplifiées, fractures dont la normale est orientée dans la direction $dir_3$. Dans ce cas, seules deux familles de fractures verticales sont générées, avec pour normales les directions d'écoulement 1 et 2 dans le cas d'un réseau de fracture de type 2.5D. Dans tous les autres cas, les paramètres équivalents décrits ci-dessus sont calculés dans les 3 directions. Trois familles de fractures seront générées avec pour normales les directions d'écoulement 1, 2 et 3.

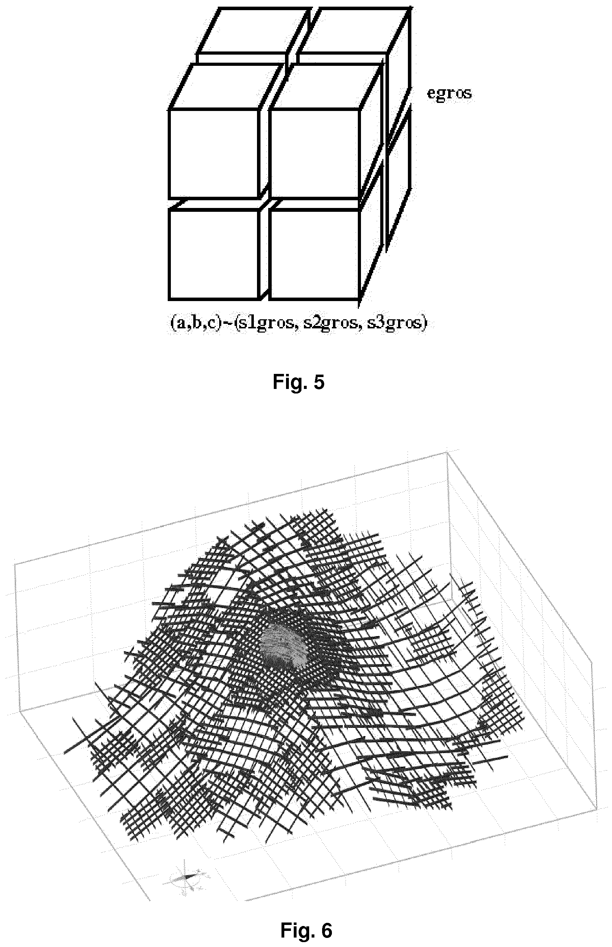

Préférentiellement, les fractures des réseaux simplifiés obtenus tels que décrit précédemment sont prolongées, le cas échéant, hors des limites des (sous-)zones de simplification afin de garantir un "recouvrement" partiel suffisant et donc une connectivité suffisante des réseaux simplifiés des sous-zones voisines. A cette fin, et suivant une procédure éprouvée par des tests, les fractures du réseau simplifié DFNs peuvent ainsi être prolongées d'une longueur égale à 60% de l'espacement maximum ($s_1^{gros}$, $s_2^{gros}$, $s_3^{gros}$) des fractures de ce réseau. Une telle image de recouvrement entre (sous-)zones de simplification est par exemple représentée sur la figure 6.

Les familles de fractures constituant le réseau de fractures d'une zone de simplification ou sous-zone de simplification d'une couche de la formation souterraine étudiée, sont à ce stade simplifiées respectivement par zone ou sous-zone de simplification. Plus précisément, chaque zone ou sous-zone de simplification d'une couche de la formation étudiée comporte un réseau de fractures simplifié DFNs caractérisé au moins par une valeur d'espacement entre fractures, une ouverture de fracture, et une valeur de perméabilité. De plus, ce modèle de réseau de fractures simplifié est calculé en tenant compte de l'orientation et de la continuité des familles de fractures de chaque zone ou sous-zone de simplification, via la détermination d'un paramètre P. Ce modèle de réseau de fractures simplifié DFNs peut être alors avantageusement (en terme de temps de calcul, mais aussi en terme d'exactitude) utilisé pour des simulations d'écoulement, qu'elles soient à l'échelle du gisement ou bien à l'échelle d'une zone d'influence d'un ou plusieurs puits.

Les étapes 1 et 2 définies précédemment sont répétées pour chaque couche de la formation souterraine d'intérêt, préalablement à la mise en oeuvre de l'étape 3.

### 3. Exploitation du fluide de la formation

Une fois les étapes 1 et 2 précédentes répétées pour chaque couche d'intérêt de la formation étudiée, il s'agit, à partir de la représentation maillée pour chacune des couches, du modèle de réseau de fractures simplifié pour chacune des couches, et d'un simulateur d'écoulement, de définir un schéma d'exploitation optimal du fluide de la formation étudiée. Par schéma d'exploitation optimal, on entend un schéma d'exploitation permettant une exploitation optimale d'un fluide considéré suivant des critères technico-économiques prédéfinis par le spécialiste. Il peut s'agir d'un scénario offrant un fort taux de récupération du fluide, sur une longue durée d'exploitation, et nécessitant un nombre de puits limité. Puis, selon l'invention, on exploite le fluide de la formation étudiée en fonction de ce schéma d'exploitation optimal.

Selon un mode de mise en oeuvre de l'invention, l'ingénieur de réservoir construit au préalable un modèle d'écoulement à l'échelle du réservoir, le modèle d'écoulement tenant compte du modèle de réseau de fractures simplifié. Selon un mode de mise en oeuvre de l'invention dans lequel on a recours à une simulation d'écoulement basée sur une approche "double milieu" (dite encore "double porosité"), deux approches peuvent être mises en oeuvre pour construire le modèle d'écoulement :

1. approche basée sur la double porosité classique

Proposée par exemple par (Warren et Root, 1963), cette approche suppose que tout volume élémentaire (maille du modèle de réservoir) du réservoir fracturé est modélisé sous la forme d'un ensemble de blocs parallélépipédiques identiques, appelés blocs équivalents, délimités par un système orthogonal de fractures uniformes continues orientées suivant les directions principales d'écoulement. L'écoulement des fluides, à l'échelle du réservoir, s'effectue à travers les fractures pour l'essentiel, et des échanges de fluides interviennent localement entre les fractures et les blocs matriciels. On peut par exemple utiliser les méthodes décrites dans les documents suivants, appliquées à l'ensemble du réservoir cette fois : FR 2757947 (US 6023656), FR 2757957 (US 6064944) et FR 2918179 (US 8078405). Ces méthodes permettent de calculer les perméabilités de fracture équivalentes et les dimensions des blocs équivalents pour chacune des mailles du modèle de réservoir. Le résultat est alors une grille remplie en propriétés équivalentes de fracture et de matrice et en taille de bloc équivalent. La résolution de l'écoulement s'effectue alors sur un maillage qui s'appuie sur celui de la représentation maillée de la formation étudiée, avec un simulateur double milieu tel que le logiciel PumaFlow (IFP Energies nouvelles, France).

2. Approche utilisant un réseau simplifié sur l'ensemble du réservoir

On peut aussi directement mailler le réseau de fractures simplifié. Pour cela, on pourra s'appuyer sur les demandes de brevet EP 2530493 (US 9103194) et EP 2581767 (US 2013/009688913). Ce maillage peut alors être fourni à un simulateur d'écoulement basé sur une représentation du type « double milieu » et pouvant traiter des maillages déstructurés, tel que le logiciel PumaFlow (IFP Energies nouvelles, France). Bien que plus coûteuse, cette simulation sera plus précise en particulier dans les cas où les mailles du modèle d'écoulement ne sont pas orientées dans les directions d'écoulement.

La définition d'un schéma d'exploitation du fluide de la formation étudiée peut consister à choisir un type de procédé de récupération (par exemple un procédé de récupération par injection d'eau) puis à déterminer, pour ce type de procédé, le nombre, la géométrie et l'implantation (position et espacement) des puits injecteurs et producteurs afin de tenir compte au mieux de l'impact des fractures sur la progression des fluides au sein du réservoir. Afin de définir un schéma d'exploitation optimal, différents essais de différents scenarii de production peuvent être réalisés à l'aide d'un simulateur d'écoulement. Le schéma d'exploitation offrant le meilleur taux de récupération de fluide pour un coût le plus faible sera par exemple préféré.

Selon une modélisation de type double milieu, on peut avoir recours à un simulateur d'écoulement dit à double milieu afin de simuler la production de fluide pour un schéma d'exploitation donné. A tout instant t de la simulation, le simulateur d'écoulement résout l'ensemble des équations d'écoulement propres à chaque maille de chacune des deux grilles du modèle (équations faisant intervenir la formule d'échange matrice-fissure décrite plus haut) et délivre ainsi les valeurs solutions des inconnues (saturations, pressions, concentrations, température,...) prédites à cet instant t. De cette résolution, découle la connaissance des quantités d'huile produites et de l'état du gisement (distribution des pressions, saturations, etc...) à l'instant considéré. A partir d'un scénario d'exploitation donnée, de la représentation double milieu du gisement, et de la formule reliant le flux d'échange de masse et/ou d'énergie à la différence de potentiel matrice-fracture, on est alors capable de simuler la production d'hydrocarbures escomptée, au moyen du simulateur d'écoulement dit à double milieu.

En sélectionnant divers scénarios, caractérisés par exemple par diverses implantations respectives des puits injecteurs et producteurs, et en simulant la production de fluide pour chacun d'eux, on peut sélectionner le scénario permettant d'optimiser la production de la formation considérée suivant des critères technico-économiques prédéfinis par le spécialiste.

Les spécialistes exploitent alors le fluide de la formation considérée selon le scénario permettant d'optimiser la production du gisement, notamment en forant les puits injecteurs et producteurs définis par ledit schéma d'exploitation optimal, et à produire le fluide selon le procédé de récupération défini par ledit schéma d'exploitation optimal.

**Variantes**

**Calcul d'un modèle de réseau de fractures simplifié sur grille fine**

Selon un mode de mise en oeuvre de l'invention, lors de l'étape de simplification 2.4, on calcule un premier modèle de réseau de fractures simplifié sur une grille fine (réseau de type boîte à sucres), issu directement du calcul de perméabilités équivalentes. Ce réseau (figure 4) est caractérisé par des espacements de fractures correspondant aux dimensions de blocs matriciels identifiés dans la zone ou sous-zone, soit $s_1^{fin}=a$, $s_2^{fin}=b$, $s_3^{fin}=c$ dans les 3 directions principales de perméabilité 1, 2, 3.

Dans cas, on définit un paramètre supplémentaire d'ouverture équivalente des fractures ($e^{fin}$), caractérisant les fractures de ce réseau fin (toutes les fractures de ce réseau fin sont supposées avoir la même ouverture). En supposant l'égalité des porosités $\phi_f$ du modèle de réseau de fracture discret DFN initial et du réseau équivalent fin, $e^{fin}$ se déduit du volume de fractures du réseau DFN initial, $V_f^{init}$, et du volume total de roche $V_T$ comme suit:

$$e^{fin} = \cfrac{1}{\left(\cfrac{1}{s_1^{fin}} + \cfrac{1}{s_2^{fin}} + \cfrac{1}{s_3^{fin}}\right)} \cfrac{V_f^{init}}{V_T} = \cfrac{1}{\left(\cfrac{1}{s_1^{fin}} + \cfrac{1}{s_2^{fin}} + \cfrac{1}{s_3^{fin}}\right)} \phi_f$$

Pour mémoire, les perméabilités principales de fracture équivalentes, issues des calculs décrits plus haut, valent $k_1$, $k_2$ et $k_3$ suivant les directions principales 1, 2 et 3. On déduit les conductivités des fractures du réseau équivalent fin, $C_{f1}^{fin}$, $C_{f2}^{fin}$ et $C_{f3}^{fin}$ suivant ces trois directions d'écoulement, en écrivant la conservation des flux par unité d'aire de milieu fracturé :

$$C_{f1}^{fin} = s_1^{fin} \cdot (-k_1 + k_2 + k_3)/2$$

$$C_{f2}^{fin} = s_2^{fin} \cdot (k_1 - k_2 + k_3)/2$$

$$C_{f3}^{fin} = s_3^{fin} \cdot (k_1 + k_2 - k_3)/2$$

Les numéros des indices f1, f2, f3 des conductivités indiquent la direction de la normale de la fracture simplifiée. Par exemple $C_{f1}^{fin}$ est la conductivité à affecter aux fractures du réseau fin suivant la direction $dir_1$, direction principale de l'écoulement proche de l'axe x de la grille réservoir.

Enfin, le milieu matriciel entre fractures possède une perméabilité $k_m^{ijk}$.

Puis on procède au remplacement de ce réseau équivalent fin (figure 4) par le réseau équivalent dit "grossier" (figure 5), car comportant des fractures plus espacées afin d'accroître le degré de simplification en vue des simulations d'écoulement ultérieures. Les propriétés géométriques et d'écoulement de ce réseau grossier sont les suivantes :

∘ des espacements de fractures $s_1^{gros}$, $s_2^{gros}$ et $s_3^{gros}$ tels que :

$$s_1^{gros} = G.s_1^{fin}$$

$$s_2^{gros} = G.s_2^{fin},$$

$$s_3^{gros} = G.s_3^{fin},$$

où G est un coefficient de grossissement (d'écartement des fractures) du réseau dont la valeur peut être déterminée comme présenté dans l'étape 2.4

∘ des conductivités de fractures $C_{f1}^{gros}$, $C_{f2}^{gros}$ et $C_{f3}^{gros}$, dont les valeurs permettent de conserver les flux par unité d'aire de milieu fracturé, c'est-à-dire également les perméabilités équivalentes, soit :

$$C_{f1}^{gros} = s_1^{gros} \cdot (-k_1 + k_2 + k_3)/2$$

$$C_{f2}^{gros} = s_2^{gros} \cdot (k_1 - k_2 + k_3)/2$$

$$C_{f3}{}^{gros}=s_3{}^{gros}.(k_1+k_2-k_3)/2$$

ou encore,

$$C_{f1}{}^{gros}=G.C_{f1}{}^{fin}\ ,\ C_{f2}{}^{gros}=G.C_{f2}{}^{fin}\ et\ C_{f3}{}^{gros}=G.C_{f3}{}^{fin}$$

Les numéros des indices f1, f2, f3 des conductivités indiquent la direction de la normale de la fracture simplifiée. Par exemple $C_{f1}{}^{gros}$ est la conductivité à affecter aux fractures du réseau grossier suivant la direction dir1, direction principale de l'écoulement proche de l'axe x de la grille réservoir.

∘ une ouverture de fracture $e^{gros}$ permettant de conserver à nouveau la porosité de fracture $\phi_f$ du réseau initial (égale à celle du réseau équivalent grossier) :

$$\phi_f = e^{gros}.(1/s_1{}^{gros}+1/s_2{}^{gros}+1/s_3{}^{gros})=e^{fin}.(1/s_1{}^{fin}+1/s_2{}^{fin}+1/s_3{}^{fin})$$

d'où :

$$e^{gros} = e^{fin}\ \frac{\dfrac{1}{s_1^{fin}}+\dfrac{1}{s_2^{fin}}+\dfrac{1}{s_3^{fin}}}{\dfrac{1}{s_1^{gros}}+\dfrac{1}{s_2^{gros}}+\dfrac{1}{s_3^{gros}}} = G.e^{fin}$$

∘ une perméabilité de matrice $keq_m{}^{ijk}$ conservant la valeur du paramètre d'échange matrice-fissure, c'est-à-dire :

$$\lambda_{fin} = r_w^2\ \frac{k_m^{ijk}}{k_f^{fin}}(\frac{\alpha}{s_1^{fin\,2}}+\frac{\alpha}{s_2^{fin\,2}}+\frac{\alpha}{s_3^{fin\,2}}) = \lambda_{grossier} = r_w^2\ \frac{keq_m^{ijk}}{k_f^{gros}}(\frac{\alpha}{s_1^{gros\,2}}+\frac{\alpha}{s_2^{gros\,2}}+\frac{\alpha}{s_3^{gros\,2}})$$

où $\alpha$ est une constante et où les perméabilités équivalentes de fracture des réseaux fin et grossier, égales, sont ici notées $k_f^{fin}$ et $k_f^{gros}$. On obtient alors une formule du type :

$$keq_m^{ijk} = k_m^{ijk}\ \frac{\dfrac{1}{s_1^{fin\,2}}+\dfrac{1}{s_2^{fin\,2}}+\dfrac{1}{s_3^{fin\,2}}}{\dfrac{1}{s_1^{gros\,2}}+\dfrac{1}{s_2^{gros\,2}}+\dfrac{1}{s_3^{gros\,2}}} = G^2 k_m^{fin}$$

Selon cette variante de réalisation de l'invention, si la valeur du paramètre P associé à la (sous-)zone de simplification considérée indique que toutes les familles du réseau de fractures considéré sont, à la fois, sensiblement orthogonales à la couche considérée et sensiblement continues vers les autres couches de la formation, les composantes selon la direction principale 3 (c'est-à-dire $dir_3$) des paramètres définis ci-dessus sont ignorées. Ainsi, seules deux familles de fractures verticales sont générées, suivant les directions d'écoulement 1 et 2 dans le cas d'un réseau de fracture de type 2.5D. Dans tous les autres cas, les paramètres équivalents décrits ci-dessus sont calculés dans les 3 directions et trois familles de fractures seront générées, suivant les directions d'écoulement 1, 2 et 3.

**Calibration des propriétés d'écoulement des fractures**

Préalablement à la simulation de la production de fluide de la formation étudiée pour différents schémas d'exploitation, il peut être avantageux de calibrer les propriétés d'écoulement des fractures (conductivité et ouverture des fractures), localement autour des puits. Une telle étape nécessite de mettre en oeuvre une simulation de tests de puits, à partir d'un simulateur de tests de puits et d'un modèle d'écoulement. Le modèle d'écoulement tient avantageusement compte du modèle de réseau de fractures simplifié déterminé à l'issue de l'étape 2.

Ce type de calibration est bien connu des spécialistes. On peut par exemple utiliser le procédé décrit dans le brevet FR 2787219 (US 6842725). On simule, les réponses en écoulement de quelques puits (tests d'écoulement transitoires ou pseudo-permanents, interférences, débitmétrie, etc.) sur ces modèles extraits du modèle de réservoir donnant une représentation discrète (réaliste) des fractures alimentant ces puits. Puis, on compare le résultat de la simulation avec les mesures réelles effectuées aux puits. Si les résultats divergent, on modifie les paramètres statistiques (PSF) décrivant les réseaux de fractures, puis on ré-applique les étapes 1 à 2 décrites précédemment, avant d'effectuer une nouvelle simulation de tests de puits. L'opération est répétée jusqu'à ce que les résultats de simulation de tests de puits et les mesures convergent.

Les résultats de ces simulations permettent de calibrer (estimer) la géométrie et les propriétés d'écoulement des fractures, telles que les conductivités des réseaux de fractures du réservoir étudié et les ouvertures.

Cette étape facultative permet de déterminer un modèle de réseau de fractures simplifié plus fiable, car permettant de construire un modèle d'écoulement permettant d'expliquer les mesures existantes. Un tel modèle peut alors être avantageusement utilisé pour élaborer un modèle d'écoulement à l'échelle de la formation, et tester différents schémas d'exploitation par simulation de réservoir.

**Produit Programme d'ordinateur**

L'invention concerne en outre un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'une des caractéristiques précédentes, lorsque ledit programme est exécuté sur un ordinateur.

**Exemple d'application**

Les caractéristiques et avantages du procédé selon l'invention apparaîtront plus clairement à la lecture de l'exemple d'application ci-après.

La présente invention a été appliquée à une formation souterraine composée d'une unique couche traversée par cinq puits, la couche contenant un fluide de type hydrocarbure et un réseau de fractures dont au moins l'orientation d'une famille conduit à une valeur de paramètre P égale à 0 (réseau de fractures de type 3D).

L'objectif de cette application est de déterminer le schéma d'exploitation optimal, c'est-à-dire un schéma d'exploitation permettant une récupération optimal des hydrocarbures, tout en respectant des contraintes technico-économiques. Parmi les schémas d'exploitation évalués par simulation d'écoulement, un schéma d'exploitation classique, de type « five-spot injection », avec un puits injecteur au centre de la formation à exploiter et quatre puits en périphérie, a été testé. Trois zones de simplification ZS1, ZS2, ZS3 de géométrie circulaire ont été définies autour de chacun des puits et pour chaque couche de la formation. Les zones de simplification ZS2 ont ensuite été découpées en sous-zones de simplification de type colonne. Et les zones de simplification ZS3 ont été découpées en sous-zones de simplification de type localement homogènes.

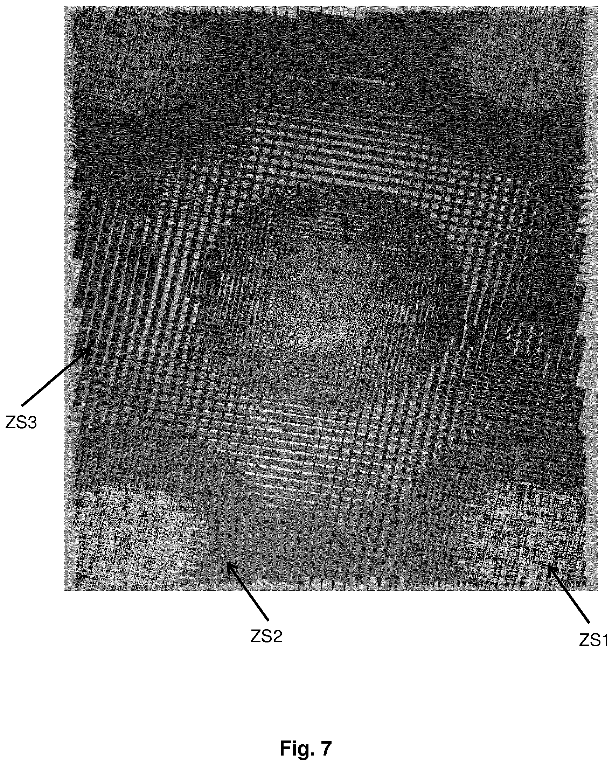

La figure 7 présente, pour une couche de la formation, les limites des sous-zones de simplification du modèle de réseau de fractures simplifié résultant de la mise en oeuvre de l'invention selon les caractéristiques définies ci-dessus. On peut notamment observer sur cette figure les zones ZS1 pour lesquelles le maillage est le plus fin (pas de simplification réalisée dans la zone ZS1), les zones ZS2 pour lesquelles le maillage est de taille moyenne (découpage en sous-zones de simplification de type colonne), et les zones ZS3 pour lesquelles le maillage est de taille plus grossière (découpage en sous-zones de simplification de type localement homogène). Chacune de ces sous-zones de simplification comporte une ouverture de fractures, un espacement de fractures, un tenseur de perméabilité, ainsi qu'un tenseur de conductivité, tels que déterminés selon l'invention.

Une simulation d'écoulement réalisée sur un réseau de fractures non simplifié DNF (caractérisé par 350000 fractures, et présentant 2560000 intersections) s'est révélée irréalisable en pratique car seulement 1% du temps de production a été simulé en deux semaines) sur une station de travail Dell Precision 5810. Avec un modèle de réseau de fractures simplifié DFNs réalisé suivant le procédé selon l'invention, la même simulation a abouti en 12 heures sur la même station de travail.

Ainsi, la simplification selon l'invention d'un modèle d'écoulement, dans le cas d'un milieu fracturé quelconque, permet un important gain de temps de calcul, tout en préservant au mieux les propriétés d'écoulement autour des puits. Ce gain en temps de calcul peut potentiellement permettre de tester plus de scénarii (schémas d'exploitation) de mise en exploitation du fluide contenu dans le milieu fracturé, et ainsi permettre de déterminer un schéma d'exploitation optimal du fluide de la formation, satisfaisant au mieux des critères technico-économiques.

**Revendications**

1. Procédé pour l'exploitation d'un fluide au sein d'une formation souterraine comprenant au moins une couche traversée par un réseau de fractures et par au moins un puits, dans lequel, on construit une représentation maillée de ladite au moins une couche à partir de mesures de propriétés relatives à ladite au moins une couche, et on définit, au moins pour ladite couche, une zone d'intérêt regroupant un ensemble de mailles de ladite représentation maillée relative à ladite couche et comprenant au moins ledit puits, **caractérisé en ce qu'**on réalise au moins les étapes suivantes pour chacune desdites couches :

   A. à partir desdites mesures, on caractérise ledit réseau de fractures par des paramètres statistiques, et on construit, à partir desdits paramètres, un modèle de réseau de fractures discret;
   B. pour chacun desdits puits contenus dans ladite zone d'intérêt, on définit au moins trois zones de simplification (ZS1, ZS2, ZS3), une première zone de simplification (ZS1) contenant ledit puits, une seconde zone de simplification (ZS2) ayant comme frontière interne la frontière externe de ladite première zone (ZS1), et une troisième zone de simplification (ZS3) ayant comme frontière interne la frontière externe de ladite seconde zone (ZS2), l'ensemble desdites zones de simplification de l'ensemble desdits puits couvrant l'ensemble des mailles de ladite zone d'intérêt ;
   C. à partir d'au moins lesdits paramètres statistiques, on détermine, pour au moins chacune desdites zones de simplification (ZS1, ZS2, ZS3) de ladite zone d'intérêt, un tenseur de perméabilité équivalente et une valeur d'un paramètre P caractérisant l'orientation et la continuité vers les autres couches des fractures dudit réseau ;
   D. on détermine une simplification dudit modèle en chacune desdites zones de simplification, en fonction de ladite zone, dudit tenseur de perméabilité équivalente et de ladite valeur dudit paramètre P, ladite simplification consistant en le calcul d'au moins une valeur d'espacement entre lesdites fractures, une ouverture desdites fractures, et une valeur de perméabilité ;

   et **en ce que**, à partir de ladite représentation maillée, dudit modèle de réseau de fractures simplifié, et d'un simulateur d'écoulement, on définit un schéma d'exploitation optimal dudit fluide de ladite formation et on exploite ledit fluide de ladite formation en fonction dudit schéma d'exploitation optimal.

2. Procédé selon l'une des revendications précédentes, dans lequel lesdits paramètres statistiques sont choisis parmi les paramètres suivants : densité de fractures, longueur de fractures, orientation des fractures dans l'espace, ouverture de fractures, et distribution de fractures au sein de ladite couche.

3. Procédé selon l'une des revendications précédentes, dans lequel lesdites zones de simplification sont des cylindres d'axe vertical et de section elliptique, centrées autour dudit puits.

4. Procédé selon la revendication 3, dans lequel le grand axe d'une desdites zones de simplification est orienté selon une direction préférentielle d'écoulement, ladite direction préférentielle étant déterminée à partir d'une diagonalisation dudit tenseur de perméabilité équivalente.

5. Procédé selon l'une des revendications précédentes 3 ou 4, dans lequel la distance séparant deux desdites zones est déterminée en fonction d'une progression géométrique de raison constante.

6. Procédé selon l'une des revendications précédentes, dans lequel aucune simplification dudit modèle de réseau de fractures n'est réalisée dans ladite première zone de simplification (ZS1), une première simplification est réalisée dans ladite seconde zone (ZS2), et une seconde simplification est réalisée dans ladite troisième zone (ZS3), ladite seconde simplification étant plus importante que ladite première simplification.

7. Procédé selon l'une des revendications précédentes, dans lequel lesdites seconde et/ou troisième zones de simplification (ZS2, ZS3) sont découpées en sous-zones de simplification annulaires.

8. Procédé selon l'une des revendications précédentes, dans lequel lesdites secondes zones de simplification (ZS2) sont découpées en sous-zones de simplification en colonne.

9. Procédé selon l'une des revendications précédentes, dans lequel lesdites troisièmes zones de simplification (ZS3) sont découpées en sous-zones de simplification localement homogènes.

10. Procédé selon l'une des revendications précédentes, dans lequel on détermine ledit paramètre P pour au moins chacune desdites zones de simplification (ZS1, ZS2, ZS3), au moyen d' :

- une valeur d'un paramètre PO mesurant l'orientation dans l'espace desdites fractures de ladite couche selon une formule du type :

$$PO = \frac{dev^2}{90^2} - 2\frac{dev}{90} + 1 \quad \text{avec dev} = \arccos\left(\overrightarrow{dir_3}.\vec{z}\right) * \frac{180}{(PI)},$$

et/ou
- une valeur d'un paramètre PC mesurant la continuité desdites fractures de ladite couche vers les autres couches selon une formule du type :

$$PC = \frac{k3}{(k1+k2)},$$

où $k_1$, $k_2$, et $k_3$ sont les valeurs propres dudit tenseur de perméabilité après diagonalisation.

11. Procédé selon l'une des revendications précédentes, dans lequel ladite simplification dudit modèle est réalisée selon trois directions de l'espace si le paramètre P caractérise des fractures non sensiblement orthogonales aux couches et/ou continues vers les autres couches.

12. Procédé selon l'une des revendications 1 à 10, dans lequel ladite simplification dudit modèle est réalisée selon deux directions de l'espace si le paramètre P caractérise des fractures sensiblement orthogonales aux couches et continues vers les autres couches.

13. Procédé selon l'une des revendications précédentes, dans lequel ledit schéma d'exploitation optimal est défini en déterminant un procédé de récupération dudit fluide, ainsi qu'un nombre, une implantation et une géométrie de puits injecteurs et producteurs permettant de satisfaire des critères technico-économiques prédéfinis.

14. Procédé selon la revendication 13, dans lequel ladite exploitation dudit fluide en fonction dudit schéma d'exploitation optimal consiste au moins à forer lesdits puits injecteurs et producteurs et à produire ledit fluide selon ledit procédé de récupération.

15. Produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'une des revendications précédentes, lorsque ledit programme est exécuté sur un ordinateur.

**Patentansprüche**

1. Verfahren zur Nutzung eines Fluids im Inneren einer unterirdischen Formation, umfassend mindestens eine Schicht, die von einem Bruchnetz und von mindestens einem Bohrloch durchquert wird, wobei eine Gitterdarstellung der mindestens einen Schicht aus Eigenschaftsmessungen in Bezug auf die mindestens eine Schicht konstruiert wird, und, für die mindestens eine Schicht, eine Zone von Interesse definiert wird, die eine Einheit von Gittermaschen der Gitterdarstellung in Bezug auf die Schicht umgruppiert und mindestens das Bohrloch umfasst, **dadurch gekennzeichnet, dass** mindestens die folgenden Schritte für jede der Schichten durchgeführt werden:

A. aus den Messungen wird das Bruchnetz durch statistische Parameter charakterisiert, und aus den Parametern wird ein diskretes Modell des Bruchnetzes konstruiert;
B. für jedes der Bohrlöcher, die in der Zone von Interesse enthalten sind, werden mindestens drei Vereinfachungszonen (ZS1, ZS2, ZS3) definiert, wobei eine erste Vereinfachungszone (ZS1) das Bohrloch enthält, eine zweite Vereinfachungszone (ZS2) als Innengrenze die Außengrenze der ersten Zone (ZS1) aufweist, und eine dritte Vereinfachungszone (ZS3) als Innengrenze die Außengrenze der zweiten Zone (ZS2) aufweist, wobei die Gesamtheit der Vereinfachungszonen der Gesamtheit der Bohrlöcher die Gesamtheit der Gittermaschen der Zone von Interesse abdeckt;

C. aus mindestens den statistischen Parametern, für mindestens jede der Vereinfachungszonen (ZS1, ZS2, ZS3) der Zone von Interesse, ein äquivalenter Permeabilitätstensor und ein Wert eines Parameters P bestimmt werden, der die Ausrichtung und die Kontinuität zu den anderen Bruchschichten des Netzes charakterisiert;

D. eine Vereinfachung des Modells in jeder der Vereinfachungszonen, als Funktion der Zone, des äquivalenten Permeabilitätstensors und des Werts des Parameters P, bestimmt wird, wobei die Vereinfachung aus der Berechnung mindestens einer Gittergröße zwischen den Brüchen, einer Öffnung der Brüche und eines Permeabilitätswerts besteht;

und dadurch, dass, aus der Gitterdarstellung, dem vereinfachten Bruchnetzmodell und einem Strömungssimulator, ein optimales Nutzungsschema des Fluids der Formation definiert wird, und das Fluid der Formation als Funktion des optimalen Nutzungsschemas genutzt wird.

2. Verfahren nach einem der vorhergehenden Ansprüche, wobei die statistischen Parameter aus den folgenden Parametern ausgewählt werden: Bruchdichte, Bruchlänge, Bruchausrichtung im Raum, Bruchöffnung, Bruchverteilung in Inneren der Schicht.

3. Verfahren nach einem der vorhergehenden Ansprüche, wobei die Vereinfachungszonen Zylinder mit einer vertikalen Achse und einem elliptischen Querschnitt sind, zentriert um das Bohrloch.

4. Verfahren nach Anspruch 3, wobei die große Achse einer der Vereinfachungszonen in einer bevorzugten Strömungsrichtung ausgerichtet wird, wobei die bevorzugte Richtung aus einer Diagonalisierung des äquivalenten Permeabilitätstensors bestimmt wird.

5. Verfahren nach einem der vorhergehenden Ansprüche 3 oder 4, wobei die Distanz, welche zwei der Zonen trennt, als Funktion einer konstanten geometrischen Progression bestimmt wird.

6. Verfahren nach einem der vorhergehenden Ansprüche, wobei keine Vereinfachung des Bruchnetzmodells in der ersten Vereinfachungszone (ZS1) durchgeführt wird, wobei eine erste Vereinfachung in der zweiten Zone (ZS2) durchgeführt wird, und eine zweite Vereinfachung in der dritten Zone (ZS3) durchgeführt wird, wobei die zweite Vereinfachung bedeutender ist als die erste Vereinfachung.

7. Verfahren nach einem der vorhergehenden Ansprüche, wobei die zweiten und/oder dritten Vereinfachungszonen (ZS2, ZS3) in Teilzonen zur ringförmigen Vereinfachung abgeschnitten werden.

8. Verfahren nach einem der vorhergehenden Ansprüche, wobei die zweiten Vereinfachungszonen (ZS2) in Teilzonen zur säulenförmigen Vereinfachung abgeschnitten werden.

9. Verfahren nach einem der vorhergehenden Ansprüche, wobei die dritten Vereinfachungszonen (ZS3) in Teilzonen zur lokal homogenen Vereinfachung abgeschnitten werden.

10. Verfahren nach einem der vorhergehenden Ansprüche, wobei der Parameter P für mindestens jede der Vereinfachungszonen (ZS1, ZS2, ZS3) bestimmt wird mit:

- einem Wert eines Parameters PO, der die Ausrichtung der Brüche der Schicht im Raum misst gemäß einer Formel des Typs:

$$PO = \frac{dev^2}{90^2} - \frac{dev}{90} + 1$$

wobei

$$dev = \arccos\left(\overrightarrow{dir_3}.\vec{z}\right) * \frac{180}{(PI)},$$

und/oder
- einem Wert eines Parameters PC, der die Kontinuität der Brüche der Schicht gegenüber den anderen Schichten misst gemäß einer Formel des Typs:

$$PC = \frac{k3}{(k1 + k2)},$$

wobei $k_1$, $k_2$ und $k_3$ eigene Werte des Permeabilitätstensors nach der Diagonalisierung sind.

11. Verfahren nach einem der vorhergehenden Ansprüche, wobei die Vereinfachung des Modells in drei Richtungen im Raum durchgeführt wird, wenn der Parameter P die Brüche nicht im Wesentlichen orthogonal zu den Schichten und/oder kontinuierlich zu den anderen Schichten charakterisiert.

12. Verfahren nach einem der Ansprüche 1 bis 10, wobei die Vereinfachung des Modells in zwei Richtungen im Raum durchgeführt wird, wenn der Parameter P die Brüche im Wesentlichen orthogonal zu den Schichten und/oder kontinuierlich zu den anderen Schichten charakterisiert.

13. Verfahren nach einem der vorhergehenden Ansprüche, wobei das optimale Nutzungsschema durch die Bestimmung eines Gewinnungsverfahrens des Fluids definiert wird, sowie einer Anzahl, einer Implantation und einer Geometrie von Injektor- und Produktionsbohrlöchern, die es gestatten, vordefinierte technischewirtschaftliche Kriterien zu erfüllen.

14. Verfahren nach Anspruch 13, wobei die Nutzung des Fluids als Funktion des optimalen Nutzungsschemas mindestens aus dem Bohren der Injektor- und Produktionsbohrlöcher und aus der Produktion des Fluids gemäß dem Gewinnungsverfahren besteht.

15. Computerprogrammprodukt, welches von einem Kommunikationsnetz heruntergeladen werden kann und/oder auf einem computerlesbaren Medium gespeichert ist und/oder von einem Prozessor ausgeführt werden kann, umfassend Programmcodeinstruktionen zur Durchführung des Verfahrens nach einem der vorhergehenden Ansprüche, wenn das Programm auf einem Computer ausgeführt wird.

**Claims**

1. Method for exploiting a fluid within an underground formation comprising at least one layer passed through by a network of fractures and by at least one well, in which a meshed representation of said at least one layer is constructed from measurements of properties relating to said at least one layer, and at least for said layer, a zone of interest is defined combining a set of meshes of said meshed representation relating to said layer and comprising at least said well, **characterized in that** at least the following steps are carried out for each of said layers:

A. from said measurements, said network of fractures is **characterized by** statistical parameters, and, from said parameters, a discrete fracture network model is constructed;
B. for each of said wells contained in said zone of interest, at least three simplification zones (ZS1, ZS2, ZS3) are defined, a first simplification zone (ZS1) containing said well, a second simplification zone (ZS2) having as its internal boundary the external boundary of said first zone (ZS1), and a third simplification zone (ZS3) having as its internal boundary the external boundary of said second zone (ZS2), the set of said simplification zones of the set of said wells covering the set of the meshes of said zone of interest;
C. from at least said statistical parameters, for at least each of said simplification zones (ZS1, ZS2, ZS3) of said zone of interest, there are determined an equivalent permeability tensor and a value of a parameter P characterizing the orientation and the continuity to the other layers of the fractures of said network;
D. a simplification of said model is determined in each of said simplification zones, as a function of said zone, of said equivalent permeability tensor and of said value of said parameter P, said simplification consisting in the computation of at least one spacing value between said fractures, an opening of said fractures, and a permeability value;

and in that, from said meshed representation, of said simplified fracture network model, and from a flow simulator, a scheme is defined for optimally exploiting said fluid of said formation and said fluid of said formation is exploited according to said optimal exploitation scheme.

2. Method according to one of the preceding claims, in which said statistical parameters are chosen from the following parameters: density of fractures, length of fractures, orientation of the fractures in space, opening of fractures, and distribution of fractures within said layer.

3. Method according to one of the preceding claims, in which said simplification zones are cylinders of vertical axis and of elliptical section, centred around said well.

4. Method according to Claim 3, in which the major axis of one of said simplification zones is oriented in a preferential direction of flow, said preferential direction being determined from a diagonalization of said equivalent permeability tensor.

5. Method according to one of the preceding Claims 3 or 4, in which the distance separating two of said zones is determined as a function of a geometrical progression of constant ratio.

6. Method according to one of the preceding claims, in which no simplification of said fracture network model is performed in said first simplification zone (ZS1), a first simplification is performed in said second zone (ZS2), and a second simplification is performed in said third zone (ZS3), said second simplification being greater than said first simplification.

7. Method according to one of the preceding claims, in which said second and/or third simplification zones (ZS2, ZS3) are subdivided into annular simplification sub-zones.

8. Method according to one of the preceding claims, in which said second simplification zones (ZS2) are subdivided into simplification sub-zones in columns.

9. Method according to one of the preceding claims, in which said third simplification zones (ZS3) are subdivided into locally uniform simplification sub-zones.

10. Method according to one of the preceding claims, in which said parameter P is determined for at least each of said simplification zones (ZS1, ZS2, ZS3), by means of:

- a value of a parameter PO measuring the orientation in space of said fractures of said layer according to a formula of the type:

$$ PO = \frac{dev^2}{90^2} - 2\frac{dev}{90} + 1 \quad \text{with} \quad dev = \arccos(\overrightarrow{dir_3}.\vec{z}) \cdot \frac{180}{(PI)}, $$

and/or
- a value of a parameter PC measuring the continuity of said fractures of said layer to the other layers according to a formula of the type:

$$ PC = \frac{k3}{(k1+k2)}, $$

where $k_1$, $k_2$ and $k_3$ are the specific values of said permeability tensor after diagonalization.

11. Method according to one of the preceding claims, in which said simplification of said model is performed in three directions of space if the parameter P characterizes fractures that are not substantially orthogonal to the layers and/or continuous to the other layers.

12. Method according to one of Claims 1 to 10, in which said simplification of said model is performed in two directions of space if the parameter P characterizes fractures that are substantially orthogonal to the layers and continuous to the other layers.

13. Method according to one of the preceding claims, in which said optimal exploitation scheme is defined by determining a method for recovery of said fluid, as well as a number, a location and a geometry of injection and production wells making it possible to satisfy predefined technical and economic criteria.

14. Method according to Claim 13, in which said exploitation of said fluid as a function of said optimal exploitation scheme consists at least in drilling said injection and production wells and in producing said fluid according to said recovery method.

15. Computer program product that can be downloaded from a communication network and/or stored on a computer-readable medium and/or that can be executed by a processor, comprising program code instructions for the implementation of the method according to one of the preceding claims, when said program is run on a computer.

**Fig. 1**

**Fig. 2a**

**Fig. 2b**

**Fig. 2c**

W
ZS1
ZS2
ss_ZS
2
ann_ZS3
ss_ann_ZS3
ZS3
ss_ZS3

**Fig. 3**

$$(a,b,c) = (s1fin, s2fin, s3fin)$$

**Fig. 4**

egros

(a,b,c)~(s1gros, s2gros, s3gros)

**Fig. 5**

**Fig. 6**

ZS3

ZS2

ZS1

**Fig. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2967200
- US 8983818 B
- EP 2530493 A
- US 9103194 B
- EP 2581767 A
- US 13644479 B
- US 20130096889 A
- FR 2918179
- US 8078405 B

- FR 2757947
- US 6023656 A
- FR 2757957
- US 6064944 A
- FR 2923930
- US 8688424 B
- US 2013009688913 A
- FR 2787219
- US 6842725 B

**Littérature non-brevet citée dans la description**

- **BOURBIAUX, B. ; CACAS, M. C. ; SARDA, S. ; SABATHIER J. C.** A Rapid and Efficient Methodology to Convert Fractured Reservoir Images into a Dual-Porosity Model. *Oil & Gas Science and Technology,* 1998, vol. 53 (6), 785-799
- Upscaling Improvement for Heterogeneous Fractured Reservoir Using a Geostatistical Connectivity Index. **DELORME, M. ; ATFEH, B. ; ALLKEN, V. ; BOURBIAUX, B.** Geostatistics. International Geostatistics Congress, 2008, vol. VIII

- **ODA, M.** Permeability tensor for discontinuous Rock Masses. *Geotechnique,* 1985, vol. 35 (4), 483-495
- **WARREN, J.E. ; ROOT, P.J.** The Behavior of Naturally Fractured Reservoirs. *SPE Journal,* Septembre 1963, 245-255
- **FOURNO, A. ; GRENIER, C. ; BENABDERRAHMANE, A. ; DELAY, F.** A continuum voxel approach to model flow in 3D fault networks: A new way to obtain up-scaled hydraulic conductivity tensors of grid cells. *Journal of Hydrology,* 2013, vol. 493, 68-80